# EUROPEAN PATENT APPLICATION

(11) **EP 2 709 019 A1**
(43) Date of publication of application: **19.03.2014**
(21) Application number: 12786563.2
(22) Date of filing: 14.05.2012
(51) Int. Cl.: G06F 13/00

(54) **ELECTRONIC DEVICE, ELECTRONIC DEVICE COORDINATION SYSTEM, AND ELECTRONIC DEVICE CONTROL METHOD**

(30) Priority: 13.05.2011 JP 2011108384; 11.05.2012 JP 2012109419
(71) Applicant: Nikon Corporation, Tokyo 100-8331 (JP)
(72) Inventor: TANAKA, Atsushi, Tokyo 100-8331 (JP)
(74) Representative: Viering, Jentschura & Partner Patent- und Rechtsanwälte
(86) International application number: PCT/JP2012/003133
(87) International publication number: WO 2012/157245

(57) **Abstract**

There are included a communication part performing communication with other device; a command managing part transmitting a command of an own device to other device and receiving a command of other device to acquire the command of other device by the communication part, and managing the command of the own device and the command of other device; and a command processing part executing processing of a function corresponding to the command of the own device by the own device when a command selected from the commands managed by the command managing part is the command of the own device, and executing processing of a function corresponding to the command of other device by the other device when the command selected is the command of the other device.

## Description

### TECHNICAL FIELD

The present invention relates to an electronic device, an electronic device cooperating system, and an electronic device controlling method.

### BACKGROUND ART

In recent years, many electronic devices have a CPU mounted therein, and have achieved various functions by a program executed in the CPU. However, there is a problem that a same kind of program must be installed for every device in order to achieve a similar function in various electronic devices. For this reason, has been considered a technology of executing processing in an integrated manner by a controller, or the like (for example, refer to Patent Document 1).

### PRIOR ART DOCUMENT

### PATENT DOCUMENT

Patent Document 1: Japanese Unexamined Patent Application Publication No. H07-044290

### DISCLOSURE OF THE INVENTION

### PROBLEMS TO BE SOLVED BY THE INVENTION

Conventionally, when a device utilizes a same function as other device, it has been necessary to install in the own device a same application software or the like as the other device, and to execute processing in an integrated manner by a controller.

A proposition of the present invention is to provide an electronic device, an electronic device cooperating system, and an electronic device controlling method that can use a command of other device similarly to a command of an own device without using a special setting and a dedicated device.

### MEANS FOR SOLVING THE PROBLEMS

An electronic device according to the present invention is characterized by including a communication part that performs communication with other device; a command managing part that transmits a command of an own device to other device and that receives a command of other device to acquire the command of other device by the communication part, and that manages the command of the own device and the command of other device; and a command processing part that executes processing of a function corresponding to the command of the own device by the own device when a command selected from the commands managed by the command managing part is the command of the own device, and that executes processing of a function corresponding to the command of other device by the other device when the command selected is the command of the other device.

An electronic device cooperating system according to the present invention includes a plurality of electronic devices, and is characterized in that each of the electronic devices individually holds a command for executing processing of a function; and the plurality of electronic devices mutually shares the commands; a command to be used is selected by a first electronic device among the commands being shared, processing corresponding to a function of a command of the first electronic device is executed by the first electronic device when the command being selected is the command of the first electronic device, and the selected command is transmitted to a second electronic device when the selected command is not the command of the first electronic device; and the second electronic device which received the selected command executes processing corresponding to a function of a command of the second electronic device and sends an execution result as a reply to a source electronic device when the selected command being received is the command of the second electronic device, and the second electronic device transmits the command to a third electronic device different from the second electronic device when the received selected command is not the command of the second electronic device.

An electronic device controlling method according to the present invention is characterized by including a command management step that transmits held by an own device among a plurality of electronic devices, that receives a command of other device to acquire the command of other device, and that manages the command of the own device which the own device executes and the command of other device which other device executes; and a command processing step that executes processing of a function corresponding to the command of the own device by the own device when a command selected from the commands being managed is the command of the own device, and that executes processing of a function corresponding to the command of other device by the other device when the command selected is the command of the other device.

The electronic device, the electronic device cooperating system, and the electronic device controlling method according to the present invention can use the command of the other device similarly to the command of the own device without using a special setting and a dedicated device.

### BRIEF DESCRIPTION OF THE DRAWINGS

FIG. 1 is a diagram showing a configuration example of an electronic device 10.
FIG. 2 is a diagram showing one example of an electronic device cooperating system 100 according to an embodiment.
FIG. 3 is a flow chart showing initial operation of the electronic device cooperating system 100 according to the present embodiment.
FIGs. 4(a) and 4(b) are diagrams showing an operation example of an electronic camera 101 according to the present embodiment.
FIG. 5 is a diagram showing an operation example of a general electronic camera 901.
FIG. 6 is a diagram showing a configuration example of the electronic camera 101.
FIG. 7 is a diagram showing a command display example of the electronic device cooperating system 100 according to the present embodiment.
FIG. 8 is a diagram showing a command execution example of the electronic device cooperating system 100 according to the present embodiment.
FIG. 9 is a diagram showing an operation example of the electronic device cooperating system 100 according to the present embodiment.
FIG. 10 is a diagram showing a cooperating operation example of the electronic device cooperating system 100 according to the present embodiment.
FIG. 11 is a flow chart showing a processing example of the electronic camera 101 according to the present embodiment.
FIG. 12 is a flow chart showing a processing example of an OS according to the present embodiment.
FIG. 13 is a flow chart showing a processing example of a command processing part 17 in the electronic device 10 according to the present embodiment.
FIG. 14 is a diagram showing an application example 1 of the electronic device cooperating system 100 according to the present embodiment.
FIG. 15 is a diagram showing an application example 2 of the electronic device cooperating system 100 according to the present embodiment.
FIG. 16 is a diagram showing an application example 3 of the electronic device cooperating system 100 according to the present embodiment.
FIG. 17 is a diagram showing an application example 4 of the electronic device cooperating system 100 according to the present embodiment.
FIG. 18 is a diagram showing an application example 5 of the electronic device cooperating system 100 according to the present embodiment.
FIG. 19 is a diagram showing an application example 6 of the electronic device cooperating system 100 according to the present embodiment.
FIG. 20 is a diagram showing an example of addition/deletion of commands.
FIG. 21 is a diagram showing a retrieval and display example of a command list.
FIG. 22 is a diagram showing one example of manipulation that combines a plurality of commands.
FIG. 23 is a diagram showing a cooperating example 1 of GUI commands.
FIG. 24 is a diagram showing a cooperating example 2 of GUI commands.
FIG. 25 is a diagram showing a cooperating example 3 of GUI commands.
FIG. 26 is a diagram showing a cooperating example 4 of GUI commands.

### BEST MODE FOR CARRYING OUT THE INVENTION

Hereinafter, an embodiment of an electronic device, an electronic device cooperating system, and an electronic device controlling method according to the present invention will be described in detail using drawings. Note that in the present embodiment, a command sharing function (hereinafter referred to as a C function) is used which utilizes mutual functions among a plurality of electronic devices (an electronic camera, a mobile phone, a printer, and the like) having various functions.

### [Configuration example of electronic device 10]

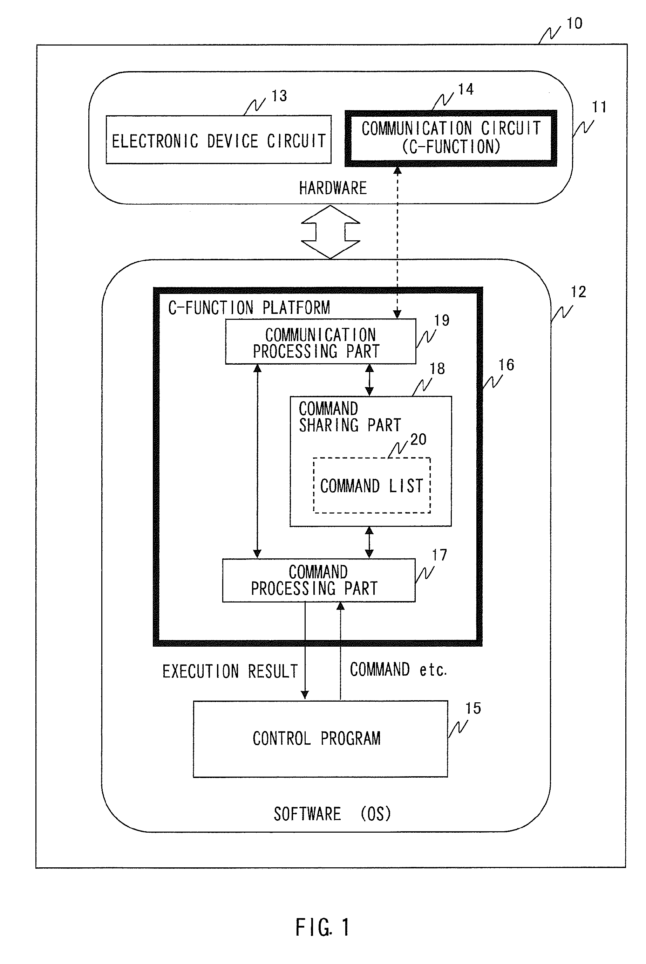

FIG. 1 is a diagram showing a configuration example of the electronic device 10 corresponding to the electronic device cooperating system according to the present embodiment.
In FIG. 1, the electronic device 10 includes hardware 11 and software 12.

The hardware 11 has an electronic device circuit 13 for responding to an original function of the electronic device 10, and a communication circuit 14 for responding to the C function. For example, in case of an electronic device, an imaging circuit, a display circuit, a recording circuit, and the like correspond to the electronic device circuit 13. Note that, in case of a mobile phone, since some of mobile phones are provided with a communication circuit for meeting specifications, such as Bluetooth (registered trademark), that can perform communication between electronic devices and software that searches an electronic device corresponding to a same function in a communicable range using the communication circuit apart from an original communication circuit of the phone for performing communication with a base station, the communication circuit 14 need not be newly provided, and it is included in the electronic device circuit 13. Here, the communication circuit 14 may be for wireless communication or for wired communication.

The software 12 is based on an OS (operation system) that controls each part of the hardware 11 to achieve operation of the electronic device 10, and has a control program 15 and a C-function platform 16 that are executed on the OS.

The control program 15 has not only a program for achieving the original function corresponding to manipulation of the electronic device 10, but a program that utilizes a function installed in other device by the C function, which is a feature of the present embodiment. Note that, whether the program utilizes a function of an own device and a function of the other device, or a combined function thereof, operation that issues a command (or an event that gives a timing to execute the command) to the C-function platform 16 (a command processing part 1 7) and obtains an execution result is the same, and the control program 15 need not be aware of whether the program has the function of the own device or the function of the other device.

The C-function platform 16 has the command processing part 17, a command sharing part 18, and a communication processing part 19.

The command processing part 17 discriminates whether a command sent from the control program 15 is an internal command (command executed by the own device) or an external command (command executed by the other device) with reference to a command list 20 of the command sharing part 18, executes processing when the command is the internal command, and performs processing that returns the execution result to the control program 15. In addition, when the command sent from the control program 15 is the external command, the command processing part 17 transmits the external command from the communication processing part 19 to the other device that is connected through the communication circuit 14 of the hardware 11. Subsequently, the command processing part 17 receives an execution result in the other device through the communication circuit 14 and the communication processing part 19, and performs processing that returns it to the control program 15.

The command sharing part 18 is a command managing part that manages as the command list 20 commands executable by the own device and the other device. Note that, various information related to the commands, such as a command type, a command function name and a parameter, is included in the commands registered in the command list 20. However, the command list 20 is the list of the commands, and a program itself to execute the commands exists in the respective electronic devices. In addition, although a list of the internal commands previously executable by the own device is registered in the command list 20, the external command that the communication processing part 19 acquires from the other device that is connected through the communication circuit 14 is appropriately added to the command list 20. Here, when the communication processing part 19 detects that communication with the other device in which the external command registered in the command list 20 is executed has been disconnected on the communication circuit 14, the command of the device registered in the command list 20 is deleted.

The communication processing part 19 establishes communication by a predetermined protocol previously decided through the communication circuit 14, and performs transmission and reception of device information, a command list, an event, and the like, or transmission of a command, reception of an execution result, and the like.

The electronic device 10 according to the present embodiment is configured as described above, and the plurality of electronic devices 10 can share commands to utilize mutual functions.

### [Operation example of electronic device cooperating system 100]

Next, there will be described basic operation of the electronic device cooperating system 100 when an electronic camera 101 and a mobile phone 102 that are provided with the hardware 11 and the software 12 corresponding to the C function are used as the electronic devices 10.

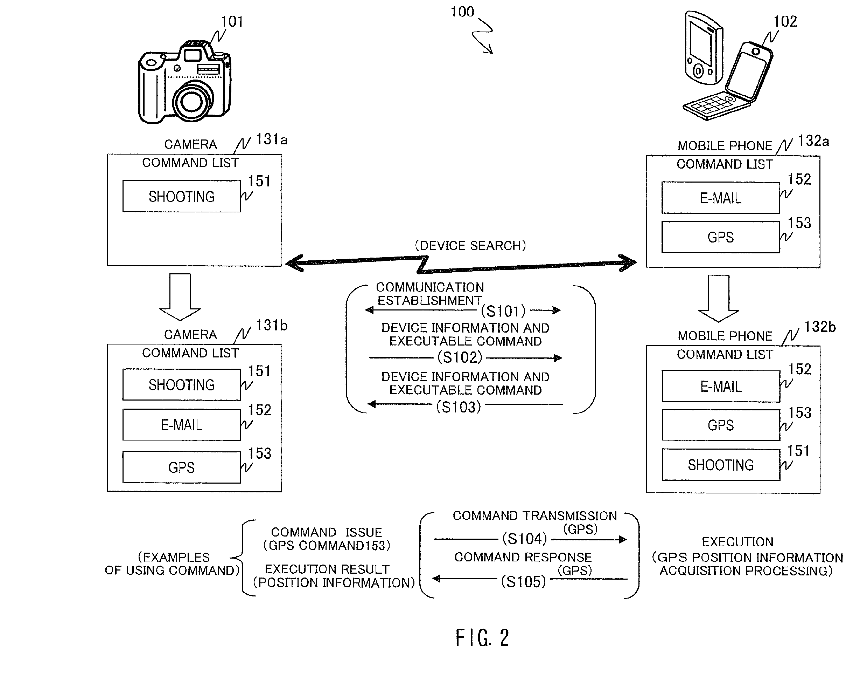

In FIG. 2, the electronic camera 101 has a shooting command 151, and the mobile phone 102 has an e-mail command 152 and a GPS (Global Positioning system) command 153. The shooting command 151 is the command that performs shooting of the electronic camera 101. The e-mail command 152 is the command that transmits and receives an e-mail. The GPS command 153 is the command that acquires position information, such as a latitude and a longitude.

Additionally, the command sharing part 18 of each of the electronic camera 101 and the mobile phone 102 transmits and receives mutual device information and command lists 20 (corresponding to a command list 131 a and a command list 132a in FIG. 2) after communication establishment (S101) by the communication processing part 19. For example, the electronic camera 101 transmits to the mobile phone 102 information, such as the one that the own device is a camera as device information, and the one that the electronic camera 101 has the shooting command 151 as the executable command list 131 a, (S102). Conversely, the mobile phone 102 transmits to the electronic camera 101 information, such as the one that the own device is a mobile phone as device information, and the one that mobile phone 102 has the e-mail command 152 and the GPS command 153 as the executable command list 132a, (S103).

As a result of this, the electronic camera 101 can hold the command list 131 b including the shooting command 151 of the own device, and the e-mail command 152 and the GPS command 153 of the mobile phone 102. Similarly, the mobile phone 102 can hold the command list 132b including the e-mail command 152 and the GPS command 153 of the own device, and the shooting command 151 of the electronic camera 101. Note that, it is the command lists that the electronic devices transmit and receive, and a program itself to execute the commands exists in the respective electronic devices.

In addition, when the other device in which communication with the own device has been established holds a plurality of commands, the command sharing part 18 may acquire all the plurality of commands, but may acquire only some commands of the plurality of commands that the other device holds. Specifically, although the above-described electronic camera 101 has the command list 131 b including the shooting command 151 of the own device, and the e-mail command 152 and the GPS command 153 that are the commands of the mobile phone 102, it may acquire only the e-mail command 152 of the commands that the mobile phone has, and add it to the command list 131 b.

In addition, although the command sharing parts 18 of the devices between which communication has been established may have a same command list in the mutual devices between which communication has been established and commands have been transmitted and received, they may have different command lists. Specifically, although the above-described electronic camera 101 has the command list 131 b including the shooting command 151 of the own device, and the e-mail command 152 and the GPS command 153 of the mobile phone 102, the mobile phone 102 is set to have the command list 132b including the e-mail command 152 and the GPS command 153 of the own device, and the command list 132b does not necessarily need to include the shooting command 151 of the electronic camera 101.

The command processing part 17 of each of the electronic camera 101 and the mobile phone 102 executes a command in the command list 20 that the command sharing part 18 holds. For example, the electronic camera 101 can execute the shooting command 151 of the command list 131 a, and the mobile phone 102 can execute the e-mail command 152 and the GPS command 153 of the command list 132a. Here, each of the command list 131 a and the command list 132a is the commands (internal commands) with which each of the electronic camera 101 and the mobile phone 102 is originally provided. Furthermore, in the electronic device cooperating system 100 according to the present embodiment, commands (external commands) of the other device transmitted and received after communication establishment can be used.

For example, in FIG. 2, when wanting to acquire position information, the electronic camera 101 transmits the GPS command 152 to the mobile phone 102 (S104), and the mobile phone 102 transmits to the electronic camera 101 a command response in which position information (a latitude/longitude, or the like) acquired by executing the GPS command 152 in the mobile phone 102 is set as an execution result (S105).

In a manner described above, the electronic camera 101 can acquire position information even though it does not have a GPS function installed therein, and can easily achieve, for example, a new function to add and save position information to header information of a photographed image.

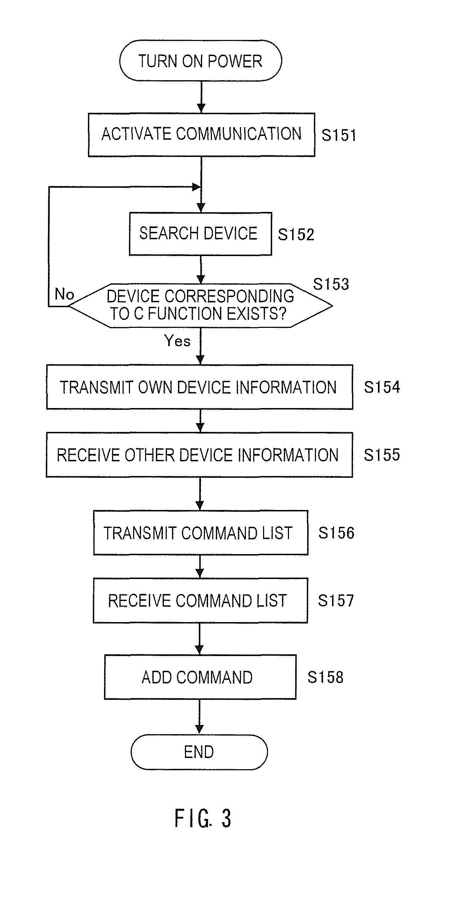

FIG. 3 is a flow chart showing processing from power-on of an electronic device to acquisition of a command list in the electronic device cooperating system 100 according to the present embodiment.

(Step S151) When a power supply of the electronic device 10 is turned on, the communication processing part 19 of the C-function platform 16 activates the communication circuit 14.

(Step S152) The communication processing part 19 searches other electronic device in a range where communication can be performed by the communication circuit 14. Note that such a function is decided by specifications, such as Bluetooth (registered trademark), for example, and it is possible to find an electronic device in a communicable range.

(Step S153) The communication processing part 19 discriminates whether or not a detected electronic device is the device responding to the C function, and when the detected electronic device does not respond to the C function, the procedure returns to step S152, and continues to search the electronic device. Additionally, when the detected electronic device responds to the C function, the procedure proceeds to step S1 54. Note that, discrimination of whether or not the electronic device responds to the C function can be achieved, for example, by adding own information indicating correspondence to the C function to control data transmitted and received at the time of communication establishment.

(Step S1 54) The communication processing part 19 transmits device information of the own device to the other device responding to the C function that has been found by device search.

(Step S1 55) The communication processing part 19 receives device information from the other device responding to the C function that has been found by device search.

(Step S156) The communication processing part 19 transmits to the other device a command list that the own device holds.

(Step S1 57) The communication processing part 19 receives from the other device a command list that the other device holds.

(Step S158) The communication processing part 19 adds commands registered in the command list received from the other device to the command list that the own device holds.

In a manner described above, in the electronic device cooperating system 100 according to the present embodiment, the electronic device can execute the command of the other device similarly to the command of the own device by transmitting and receiving the executable command lists to and from the other device. In addition to that, since execution itself of the command is performed on the device having the command, there is no need to install software or a driver program for executing a command as in a conventional way, and execution of the command does not depend on an OS type.

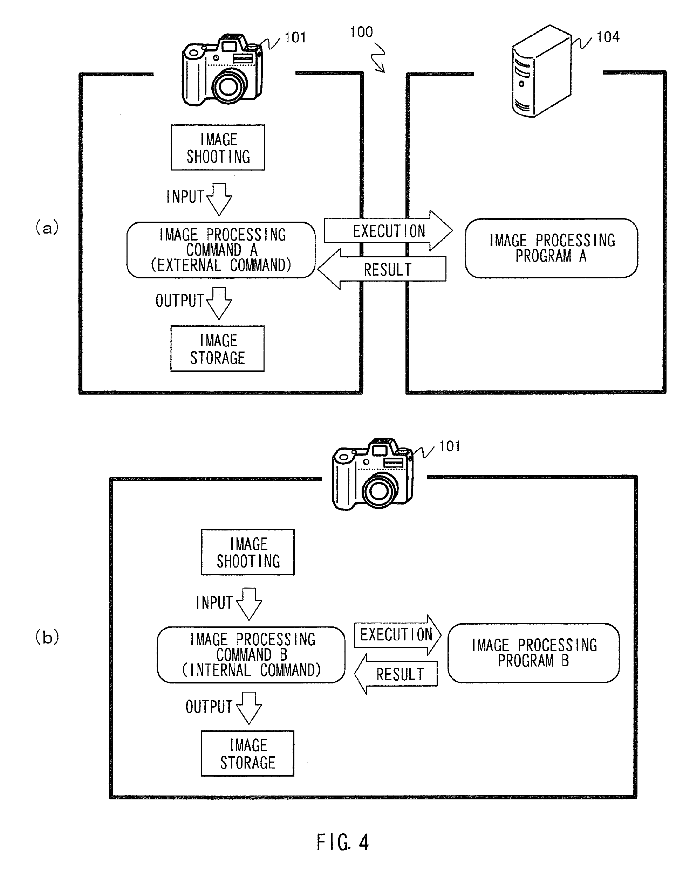

FIGs. 4(a) and 4(b) are diagrams depicting execution of commands in the electronic camera 101 corresponding to the electronic device cooperating system 100 according to the present embodiment. FIG. 4(a) shows a processing example in which image processing A is applied to an image photographed by the electronic camera 101, and in which the processed image is saved in a memory card or the like. Here, since an image processing command A is an external command that cannot be executed in the electronic camera 101, the image processing command A and image data are transmitted to a server 104 having an image processing program A, the image processing A is applied by the server 104, and the processed image data is sent as a reply to the electronic camera 101. Subsequently, the electronic camera 101 saves the image data which is received from the server 104 and to which the image processing A has been applied, in the memory card or the like as the photographed image.

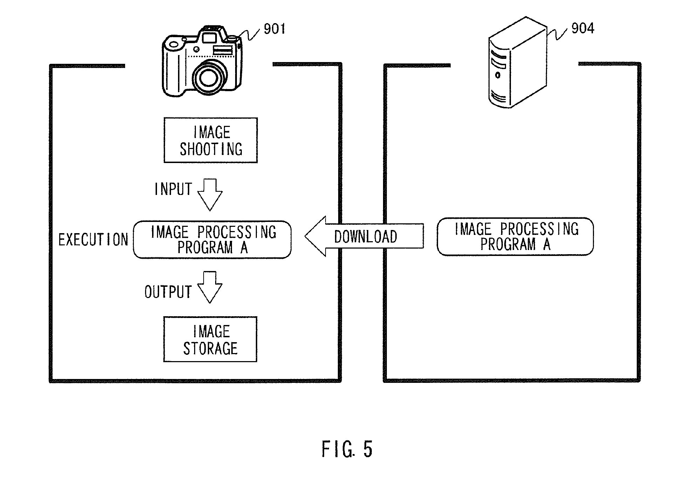

Meanwhile, FIG. 5 shows a flow of processing that saves in a memory card or the like an image to which the image processing A has been applied by a conventional electronic camera 901. Here, the image processing program A itself is downloaded from the server 904 having the image processing program A in order to apply the image processing A by the electronic camera 901, the image processing A is applied by the electronic camera 901, and the processed image data is saved in a memory card or the like as a photographed image. However, when the electronic camera 901 and the server 904 differ in an execution environment, such as an OS, the image processing program A cannot be executed in the electronic camera 901. Alternatively, there is also a case where driver software or the like must be installed in order to execute the image processing program A in the electronic camera 901. Furthermore, even when the image processing program A can be executed in the electronic camera 901, the electronic camera 901 and the server 904 differ in processing capacity of CPUs, and thus a processing speed of the image processing program A may be slow. In contrast with this, with the electronic device cooperating system 100 according to the present embodiment of FIG. 4(a), the electronic camera 101 issues the command of the image processing A, the server 104 executes the image processing A itself, and thus problems, such as execution environments, such as an OS, and a processing speed of the electronic camera 101 do not occur.

Furthermore, FIG. 4(b) shows a flow of processing in which image processing B is applied to the image photographed by the electronic camera 101, and in which the processed image is saved in the memory card or the like. Here, since an image processing command B is an internal command that can be executed in the electronic camera 101, the image processing command B and image data are sent to a control program in the own device, the image processing B is applied, and the processed image data is received and saved in the memory card or the like.

As described above, the electronic camera 101 in the electronic device cooperating system 100 according to the present embodiment can similarly issue a command to perform processing regardless of the external command or the internal command.

### [Device information]

Next, device information will be described. As described in FIG. 2, the electronic device 10 corresponding to the electronic device cooperating system 100 according to the present embodiment transmits and receives device information at the time of communication establishment. This device information, for example, includes the following information.
- Country ID: It may be a unique ID decided for each country, or a country name. For example, JAPAN.
- Maker ID: It may be a unique ID decided for every manufacturer, or a manufacturer name. For example, ABCDE Company.
- Device category ID: It may be a unique ID indicating a category decided for every device type, or a device name. For example, a camera, a mobile phone, a printer.
- Device ID: It is a unique ID decided for every device, which is a manufacturing number, a serial number, or the like.
- Owner ID: It may be a unique ID previously decided for every owner of a device, or an owner name, an address, a telephone number, or the like.

As described above, in the electronic device cooperating system 100 according to the present embodiment, the device information as described above is transmitted and received at the time of communication establishment. This allows, only specific devices, such as a device of a specific country, a device of a same manufacturer, a device of a same category, a device of a same owner, to utilize a command.

### [Command]

Next, information included in commands will be described. As described in FIG. 2, there are an internal command executed by an own device and an external command executed by other device in the commands, and any command includes the following information.
- Command type: A command that is executed alone, a batch processing command, and the like.
- Executable device: A device type, such as a camera or a mobile phone, an individual device ID, or the like.
   (Note that the device type and the device ID are included in the device information transmitted and received at the time of communication establishment)
- Command function name: For example, a shooting function, a GPS function, a printer function, a super-resolution image processing function.
- Command ID: A unique ID previously decided for every command, or a command name. For example, a shooting command, a print command.
- Parameter: A parameter referred to by a command. For example, in case of a shooting command, a parameter is a shutter speed, an aperture value, or a selection value of a shooting mode (night scene mode or the like). Note that information on a selectable numerical value range and all the selection values is also included.
- Command execution result: It is a result obtained by execution of a command, and it is an execution result, such as a numerical value or image data. For example, in case of the GPS command, a command execution result is a numerical value, such as a latitude/longitude, and in case of image processing, an execution result is processed image data.
- Icon: An image for making a command easily be discriminated when the command is displayed on a screen. For example, in case of an e-mail command, an icon is the icon of a sealed letter image. Note that icons may be classified according to color for every device, or a shape, a size, a pattern, or the like of the icons may be changed. Alternatively, an image or an illustration of the device may be used as the icon itself. This allows to easily discriminate which device the icon indicates.
- Tutorial: A usage or functional description of a command. It corresponds to so-called HELP information.
- Information on another command used by command: A command or the like that utilizes an execution result of another command in batch processing or the like. For example, when an address command that calculates an address of a current position is provided, a GPS command is executed in the address command, a position on a map is retrieved from numerical values of a latitude/longitude obtained by the GPS command, and the address is calculated.
- Creator information: A command creator ID, name, or the like.

As described above, in the electronic device cooperating system 100 according to the present embodiment, a command list including the information as described above is transmitted and received at the time of communication establishment. Since this allows to know, for example, a parameter and a usage of a command, operation setting can be easily performed even for a first command, and a desired execution result can be obtained.

Here, command examples in various electronic devices will be shown hereinafter.
- A case where an electronic device is a mobile phone
   "GPS command": Provision of latitude/longitude information
   "Mail transmission command": Transmission of an e-mail
   "Super-resolution image processing command": Image processing that achieves higher resolution
   "Sound recording command": Record sounds with a microphone
- A case where the electronic device is a camera
   "Still image AUTO shooting command": Photograph a still image with automatic exposure and automatic focus
   "High-speed shutter shooting command": Photograph an image with high-speed shutter "Defocus priority shooting command": Photograph a defocused image with a shallow depth of field
   "Motion image shooting command": Photograph motion images
- A case where the electronic device is a printer
   "Photo printing L format": Print in an L format
   "Photo printing A4": Print in A4
- A case where the electronic device is a FAX
   "Image transmission": Transmit image data
   "Data reception": Receive image data
- A case where the electronic device is a television
   "Image display": Display image data on a screen
   "Channel selection": Select a channel to receive broadcasting
   "Television program listing acquisition command": Acquire a program listing of television broadcasting from other device
   "Television picture acquisition command": Acquire a television broadcasting screen from other device
- A case where the electronic device is a video
   "Still image recording": Record a still image
   "Motion image recording": Record motion images
- A case where the electronic device is a network-connectable device
   "Internet retrieval command": Acquire net information from other device
   "Music information acquisition command": Acquire music information distributed on a network

As described above, in the electronic device cooperating system 100 according to the present embodiment, a command of other device can be executed similarly to a command of an own device, and a function of the other device that the own device does not have can be utilized. As a matter of course, a function that the other device has can also be utilized even though the own device has the same function. For example, when the own device has a GPS function, a GPS function of the other device may be utilized, and in this case, an effect that a processing load of the own device can be reduced can be obtained by utilizing not the function of the own device but the same function of the other device. Alternatively, there is an advantage in utilizing the same function of the other device, when the function is the same but performance differs, or when the function is the same but a processing speed is faster. In addition, processing that enhances accuracy of position information may be performed by combining position information obtained from GPS of a plurality of devices.

In addition, the above-described example has been described based on the example of the command for executing a function (a printer, image processing, or the like) desired for the electronic camera 101 by the other device, when manipulation is performed from the electronic camera 101. However, a command may be the command for performing manipulation from a device other than the electronic camera 101, and executing in the other device a function desired for the device other than the electronic camera 101.

For example, when manipulation is performed from the printer, a function that views an image saved in the electronic camera 101 (a saved image acquisition command), a function that acquires a list of thumbnail images (a thumbnail image acquisition command), or the like may be executed. Note that a specific example where manipulation is performed from the printer will be described in detail later.

### [Event]

Next, information included in an event will be described. Although FIG. 2 shows an example where an issued command is executed by the own device or the other device, and an execution result is obtained, a timing to execute the command can also be given. For example, in FIG. 2, when the shooting command 151 of the electronic camera 101 is utilized from the mobile phone 102, a timing to perform shooting must be instructed, for example, to perform shooting when a shutter button of the electronic camera 101 is pressed. Note that in such a usage that the shooting is performed immediately when the mobile phone 102 has issued the shooting command 151, there is no need to instruct an event in which shooting is performed at the time of the shutter button being pressed.

One example of information included in the event will be shown hereinafter.
- Event type: It is control information, such as operation and processing interrupt. For example, shutter button press is included in the operation, and e-mail reception, a previously set time, and the like are included in the processing interrupt.
- ID of a device in which the event has been generated: A device ID described in device information. For example, the device ID: a camera.
- Event name: A name of the event. For example, timer interrupt, shutter button press, or face recognition.
- Event ID: An ID corresponding to an event name. For example, ID=RB_DOWN when the event is shutter button press. Note that actually, this event ID is transmitted and received.
- Parameter: A parameter referred to in the event. For example, a time to execute a command. Note that information on a selectable numerical value range and all the selection values is also included.
- Icon: An icon image when a command list is displayed.
- Tutorial: A usage or functional description of an event. It corresponds to so-called HELP information.
- Information of a command that is executed with this event as a trigger: For example, a shooting command if the event is shutter button press.
- Creator information: An event creator ID, a name, or the like.

As described above, in the electronic device cooperating system 100 according to the present embodiment, the event as described above is also transmitted and received being included in the previously described command list, at the time of communication establishment. As a result of this, for example, an event for executing a command can be known, and a parameter, a usage, and the like of the event can also be confirmed.

Here, event examples in various electronic devices will be shown hereinafter.
- A case where an electronic device is a mobile phone
   "Incoming call", "e-mail reception", "keyboard manipulation", "cross key manipulation", or the like.
- A case where the electronic device is a camera
   "Shutter button press", "dial manipulation", "still image shooting", "SD card insertion", or the like.
- A case where the electronic device is a printer
   "Panel manipulation", "SD card insertion", "out of ink", or the like.
- A case where the electronic device is a television
   "Channel manipulation", "remote control", or the like.
- A case where the electronic device is a video
   "Play button press", "fast-forward button press", or the like.

As described above, in the electronic device cooperating system 100 according to the present embodiment, events for executing the command of the other device and the command of the own device are also shared between devices.

### [Configuration example of electronic camera 101]

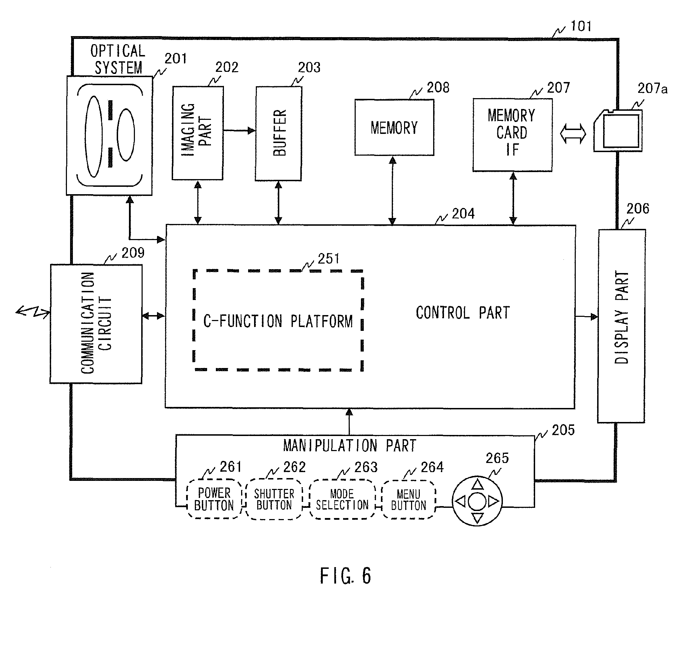

FIG. 6 is a diagram showing a configuration example when the electronic device 10 according to the present embodiment is the electronic camera 101.

The electronic camera 101 includes: an optical system 201; an imaging part 202; a buffer 203; a control part 204; a manipulation part 205; a display part 206; a memory card IF (interface) 207; a memory 208; and a communication circuit 209.

In FIG. 6, the optical system 201 forms an object image on a light receiving surface of the imaging part 202. Here, the optical system 201 has a plurality of lenses, such as a zoom lens and a focus lens, a lens driving part, an aperture mechanism, and the like, and the control part 204 controls a zoom lens position, a focus lens position, an aperture value, and the like.

The imaging part 202, for example, has a CMOS-type solid imaging element and an A/D converter, converts into an electrical signal an object image formed on the light receiving surface of the solid imaging element according to a light receiving amount, and further takes A/D converted image data into the buffer 203.

The buffer 203, for example, includes a volatile high-speed memory. The buffer 203 does not only temporarily store the image data that the imaging part 202 outputs, but is used also as a buffer memory when the control part 204 performs image processing. Alternatively, the buffer 203 is used also as a display memory when an image is displayed on the display part 206.

The control part 204, for example, includes a CPU that operates according to a program stored therein. The control part 204 controls operation of the whole electronic camera 101, for example, selects a shooting mode of the electronic camera 101 by a mode selection dial 263 of the manipulation part 205, performs focus lens control and aperture control of the optical system 201 at the time of press of a shutter button 262 and controls a mechanical shutter or an electronic shutter of the imaging part 202 to photograph an object image. Additionally, the control part 204 reads the image data from the imaging part 202, and performs control to take it into the buffer 203. Furthermore, the control part 204 applies predetermined image processing (white balance processing, color interpolation processing, gamma correction processing, saturation saturation enhancement processing, edge enhancement processing, or image compression processing complying with a JPEG standard) to the image data taken into the buffer 203, and adds a predetermined filename and header information to the image data (for example, JPEG data) after image processing to save it in a memory card 207a. Alternatively, the control part 204 displays the image data taken into the buffer 203 on the display part 206 as a photographed image.

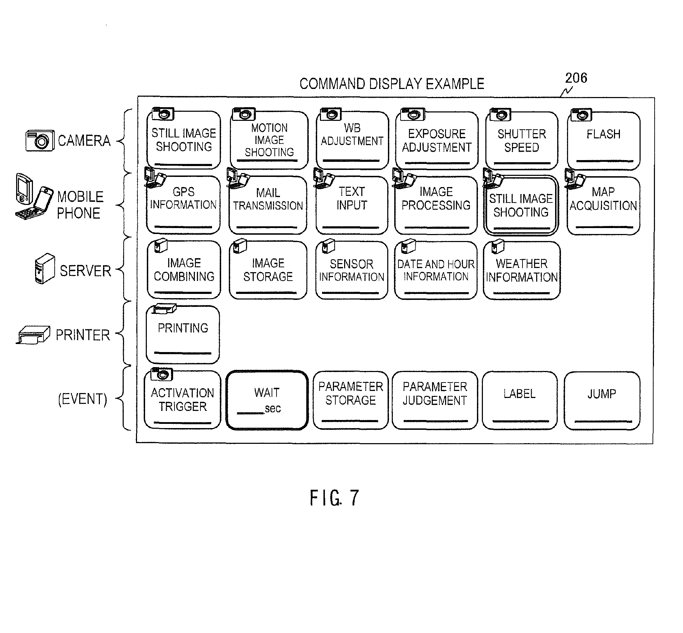

The manipulation part 205 includes: a power button 261; a shutter button 262; a mode selection dial 263; a menu button 264; a cross key 265, and the like. A user manipulates these manipulation buttons to use the electronic camera 101. Note that manipulation information by the manipulation part 205 is output to the control part 204, and the control part 204 controls operation of the electronic camera 101 according to the manipulation information input from the manipulation part 205. For example, when the user presses the menu button 264, the control part 204 displays on the display part 206 a menu screen on which the user selects a function of the electronic camera 101. Subsequently, the user manipulates the cross key 265 to perform manipulation of the menu screen. Particularly, in the electronic camera 101 according to the present embodiment, when the user presses the menu button 264, a command list as shown in FIG. 7 is displayed, and a function of other device can be utilized by selecting a command by the cross key 265. Alternatively, a new application function can be achieved by combining these commands.

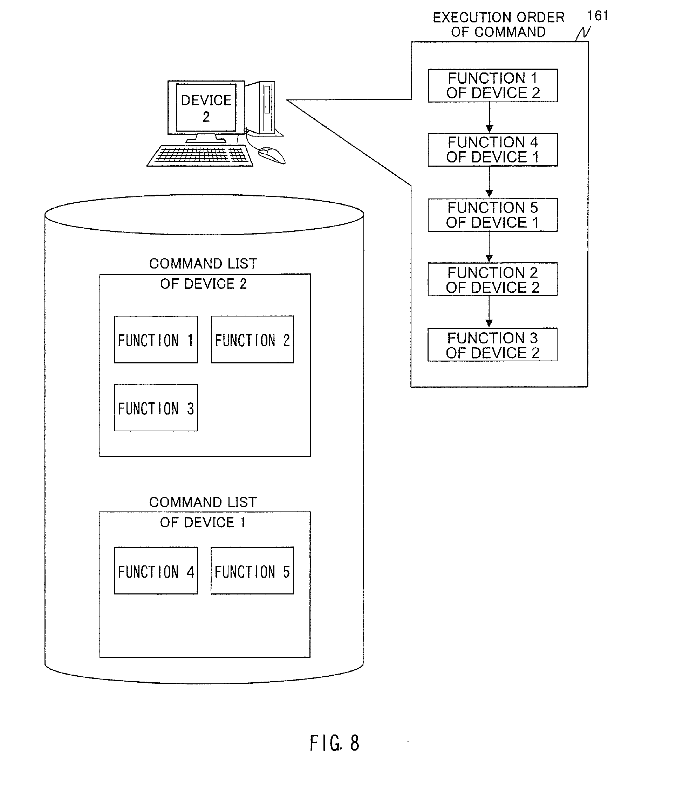

For example, as shown in FIG. 8, commands of functions 1 to 3 are registered as the commands (internal commands) of the own device in a command list of a device 2, and commands of functions 4 and 5 are registered as the commands (external commands) of other device (device 2). As a result of this, the device 2 can use the five commands of the functions 1 to 5. An application program in which these commands are combined can be then executed. In an example shown in FIG. 8, as execution order 161 of the commands, the command of the function 1 of the device 2, the command of the function 4 of the device 1, the command of the function 5 of the device 1, the command of the function 2 of the device 2, the command of the function 3 of the device 2 are executed in that order.

Note that in FIG. 7, icons indicating commands may be classified according to color for every device, or may be classified according to a shape, a size, a pattern, or the like for every device. In addition, an image, a character, or the like indicating a device may be displayed on a part of the icon of a command so as to be understood which device the command corresponds to. As a result of this, when there exists a plurality of devices having a same function, it can be easily discriminated that which device the function corresponds to. For example, when a shooting command of a mobile phone with camera and a shooting command of an electronic camera can be utilized, an icon is displayed by adding to a part of the icon a graphic or a device name of the mobile phone or the electronic camera, and thereby it can be easily discriminated that which device a command belongs to.

The display part 206, for example, includes an LCD monitor. Additionally, the control part 204 displays a photographed image, a setting menu, and the like.

The memory card IF 207 is an interface for connecting a memory card 207a to the electronic camera 101. The control part 204 reads and writes image data from/in the memory card 207a through the memory card IF 207.

The memory 208, for example, includes a nonvolatile semiconductor memory, such as a flash memory. Parameters, such as a shooting mode, exposure information, and focus information that have been set in the electronic camera 101, are stored in the memory 208. Particularly in the present embodiment, the command lists of the own device or the other device, device information, events, and the like are stored.

The communication circuit 209 corresponds to the communication circuit 14 of FIG. 1, and complies with standards, such as Bluetooth (registered trademark) that can perform communication between electronic devices.

The above is the configuration and basic operation of the electronic camera 101.

### [Operation example of electronic device cooperating system 100]

Next, there will be described an operation example of the electronic device cooperating system 100 using the electronic camera 101. Note that a basic flow of operation is as follows.
(1) Establish communication between devices.
(2) Transmit information on an own device to an opposite party.
(3) Transmit to an opposite device a command list executable in the current own device.
(4) Receive device information and a command list also from the opposite device.
(5) When having received a command from the opposite device, the own device executes the command, and sends an execution result as a reply.
(6) The own device transmits a command to the opposite device if needed, and receives an execution result.

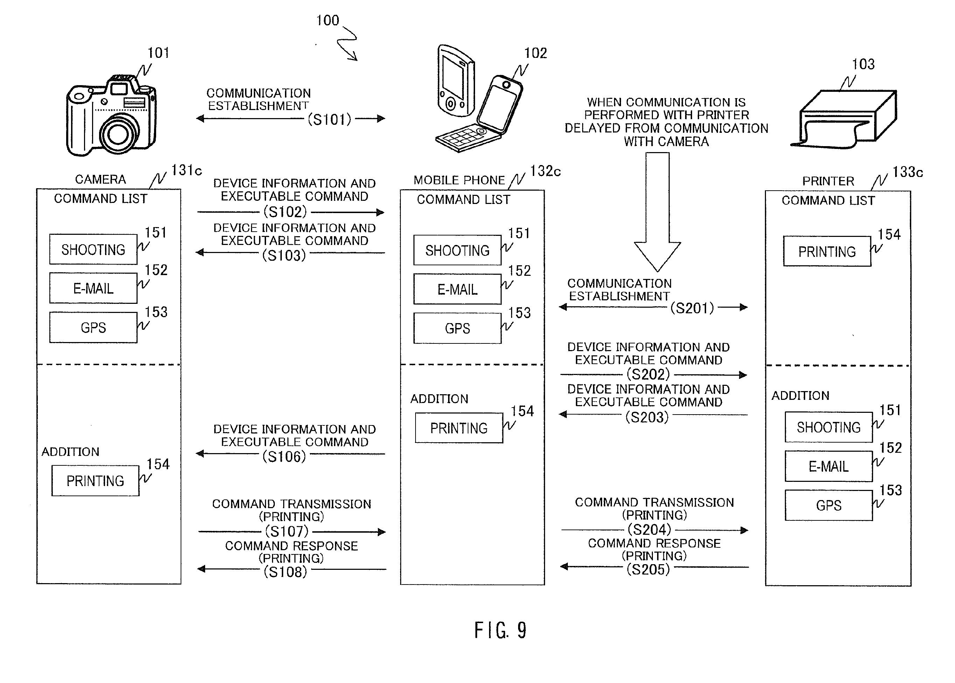

FIG. 9 is one example of the electronic device cooperating system 100 when the electronic camera 101, the mobile phone 102, and the printer 103 are utilized as the electronic device 10 corresponding to the C function. Note that blocks and processing that have the same symbols as FIG. 2 are the same as those in FIG. 2.

In FIG. 9, after communication is established between the electronic camera 101 and the mobile phone 102 (S101), device information and an executable command are transmitted and received (S102, S103). A command list obtained by the above is the same as the command list 131 a and the command list 132a of FIG. 2. For example, at this time, the shooting command 151, the e-mail command 152, and the GPS command 153 are held in the command list 131 c of the electronic camera 101 and the command list 132c of the mobile phone 102.

Subsequently, communication is established between the mobile phone 102 and the printer 103 (S201) a little delayed from communication establishment (S101), and a currently executable command held in the command list 132c of the mobile phone 102 is transmitted to the printer 103 together with device information (S202). Conversely, a currently executable command held in a command list 133c of the printer 103 is transmitted to the mobile phone 102 together with device information (S203). As a result of this, the shooting command 151, the e-mail command 152, and the GPS command 153 are transmitted to the printer 103 from the mobile phone 102 to be added to the command list 133c, and a printing command 1 54 is transmitted to the mobile phone 102 from the printer 103 to be added to the command list 132c.

Furthermore, since the printing command 154 has been newly added to the command list 133c, a command sharing part 123 of the mobile phone 102 transmits the printing command 154 and the device information to the electronic camera 101 with which communication has been previously established (S106). As a result of this, the printing command 154 is added to the command list 131 c of the electronic camera 101.

In a manner described above, the electronic camera 101 can acquire the printing command 154 of the printer 103 through the mobile phone 102, and can utilize a printing function. Note that when the electronic camera 101 and the printer 103 exist in a communicable range, the electronic camera 101 and the printer 103 directly perform communication establishment, and transmit and receive the mutual command lists. In this case, although the printing command 154 acquired through the mobile phone 102 and the printing command 154 directly received from the printer 103 overlap with each other, the command sharing part 18 of the electronic camera 101 can understand that the two printing commands 154 are the same ones of the same printer by the device information and the like included therein, and thus ignores the overlapping command when it is the command having already been registered in the command list 131 c.

Here, in FIG. 9, in the command list transmitted from the mobile phone 102 to the printer 103 in step S202, included are not only the internal commands (the e-mail command 152, the GPS command 153) of the own device, but also the external command (the shooting command 151) of the electronic camera 101 as the other device. As a result of this, the commands are transferred in order also between the devices that cannot be directly connected, and the commands can be shared among the plurality of devices.

Furthermore, when a new device is added, a new command that the device has is transmitted to the plurality of devices with which communication has been established, and thus the command lists of all the devices can always be updated to be the newest states.

Particularly, in the electronic device cooperating system 100 according to the present embodiment, since each device operates as equals without having a master/slave relation thereamong, determination on whether the own device is the master or the slave, complex switching processing for switching operation, and the like become unnecessary, and the command of the other device can be unintentionally executed similarly to the command of the own device.

### [Execution example of command]

Next, in FIG. 9, when executing the printing command 1 54, the electronic camera 101 transmits the printing command 154 to the mobile phone 102 (S107). Since in the mobile phone 102, the printing command 154 is not the command of the own device but the command of the printer 103, the mobile phone 102 transmits the printing command 154 to the printer 103 (S204). Subsequently, the printer 103 executes the printing command 154 to print a photographed image, and transmits a command response indicating printing completion to the mobile phone 102 (S205). Note that information on the device that executes the command is added to the issued command by the previously described device information and command information. The mobile phone 102 that has received the command response from the printer 103 transmits the command response to the electronic camera 101 as a command issuer (S108). Subsequently, the electronic camera 101 that has received the response command of the printer 103 through the mobile phone 102 confirms that execution of the printing command 1 54 has been completed.

In a manner described above, the electronic camera 101 can print the photographed image by the printer 103 through the mobile phone 102. Particularly, installation and setting of driver software of the printer 103 need not be performed in the electronic camera 101, and the electronic camera 101 can print a photographed image as if the printing function was its own function.

### [Other example]

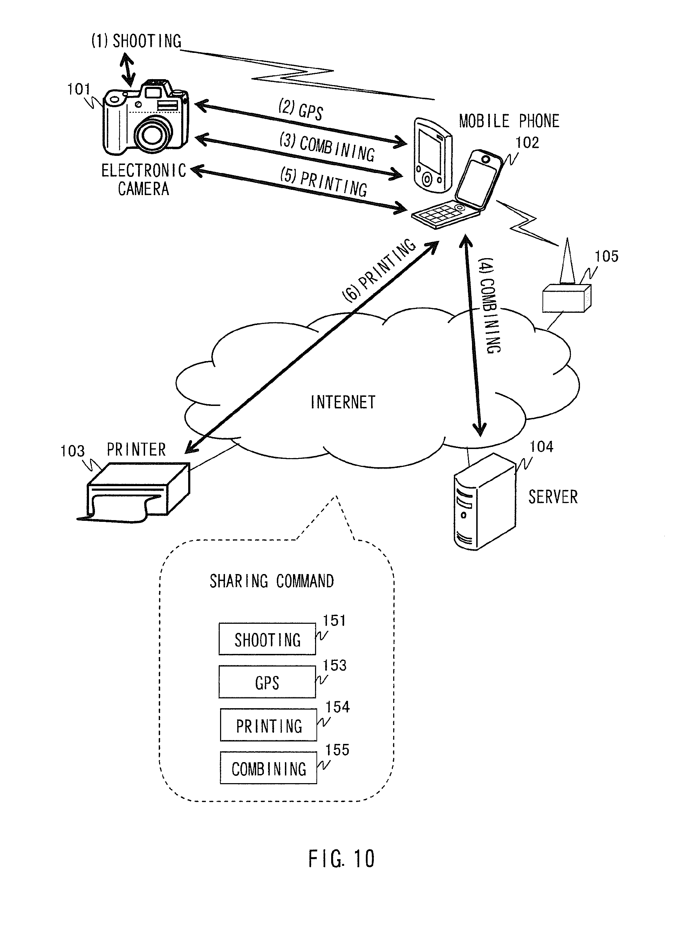

Next, FIG. 10 is a diagram showing one example of the electronic device cooperating system 100 that makes cooperatively operate the four devices, i.e., the electronic camera 101, the mobile phone 102, the printer 103, and the server 104. In an example of FIG. 10, such a utilization scene is assumed that "An image photographed by the electronic camera 101 at a sightseeing spot is combined with position information, and a photographer prints the combined image by the printer 103 that is located in his/her house". Here, as described in FIGs. 2 and 9, the four electronic devices of FIG. 10 are in a state where they mutually transmit and receive device information and command lists, and share the same command lists with one another. Available commands in this case are, for example, as described in FIG. 9, three commands: the shooting command 151 of the electronic camera 101; the GPS command 153 of the mobile phone 102; and the printing command 154 of the printer 103, and a combining command 155 of the server 104.

In addition, the electronic camera 101 transmits and receives control information to/from the mobile phones 102 with which a photographer carries around by a wireless scheme complying with Bluetooth (registered trademark), WiFi (registered trademark), or the like. The mobile phone 102 is connected to the server 104 that performs processing of image combining through the Internet from a server 105 of a mobile phone company through a base station. The mobile phone 102 is then connected to the printer 103 that is located in the photographer's house through the Internet from the server 104 using a wire, such as an optical fiber or an ADSL. Note that although the printer 103 is directly connected to the Internet in order that description is easily understood in the example of FIG. 10, actually, the mobile phone 102 is connected to the printer 103 through a router, a personal computer, or the like of the photographer's house.

Hereinafter, operation of FIG. 10 will be described in order. Note that, the following (1) to (7) correspond to (1) to (7) of FIG. 10.
(1) When a photographer presses the shutter button 262 of the electronic camera 101, the electronic camera 101 executes the shooting command 151, and takes a photographed image into the buffer 203.
(2) The electronic camera 101 transmits the GPS command 153 to the mobile phone 102, and acquires position information (latitude/longitude information or address information converted with map data) that the mobile phone 102 has acquired.
(3) The electronic camera 101 transmits the combining command 155 to the mobile phone 102. Note that the combining command 155 includes image data photographed in (1), and the position information acquired in (2).
(4) Since the combining command 155 is not the internal command of the own device, the mobile phone 102 transfers the combining command 155 via a network to the server 104 that is the device to execute the combining command 155. Subsequently, the server 104 executes the combining command 155 that is an internal command of the own device, and transmits an image as an execution result in which the photographed image is combined with the position information. Note that, the image as the execution result is conversely transferred through a same path of the combining command 155.
(5) The electronic camera 101 transmits the printing command 154 to the mobile phone 102 in order to print the combined image data received from the server 104. Note that the printing command 154 includes the combined image data.
(6) Since the printing command 154 is not the internal command of the own device, the mobile phone 102 transfers the printing command 154 to the printer 103 that is a device to execute the printing command 154 via the network. Subsequently, the printer 103 executes the printing command 154 that is an internal command of the own device, and prints the photographed image combined with the position information. Subsequently, a response indicating printing completion is transmitted to the electronic camera 101 conversely through a same path of the printing command 154, the electronic camera 101 displays on the display part 206 a message indicating that the printer 103 in the house has normally printed the photographed image, and the photographer confirms the display.

In a manner described above, various functions of the other devices can be utilized similarly to the function of the own device.

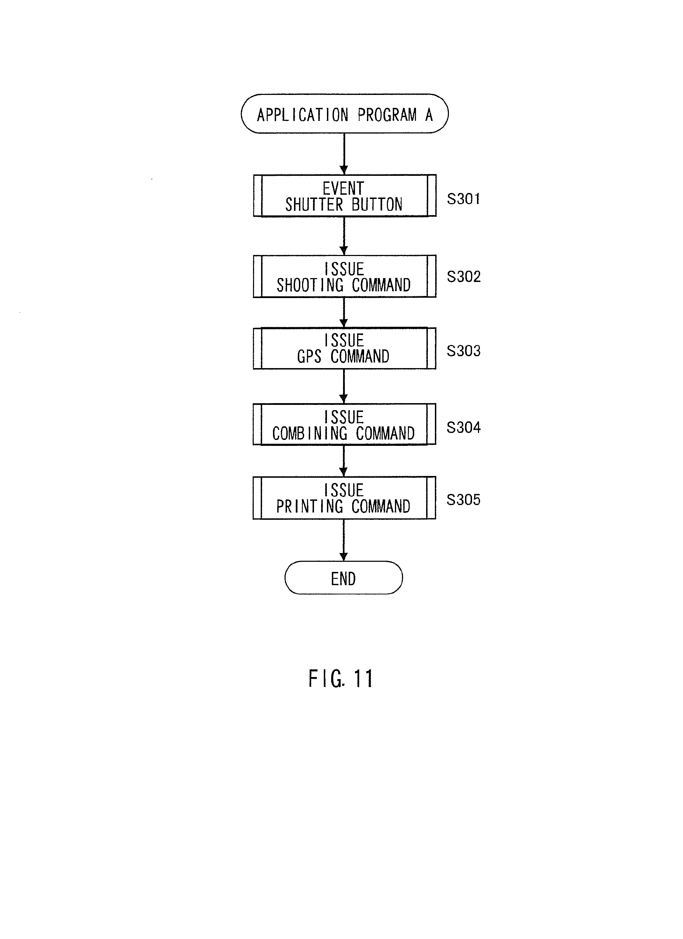

FIG. 11 is a flow chart showing the processing (it is set as the processing of an application A) described in FIG. 10. Note that a user can freely create the processing of the application A, for example, by combining the commands of the command list 131 c. For example, an icon corresponding to each command as described in FIG. 7 is aligned in processing order, and thereby various application functions can be achieved. In the present embodiment, the processing will be described assuming that an application program having the processing order shown in FIG. 11 has already been created.

(Step S301) The control part 204 discriminates whether or not the shutter button 262 has been pressed, and waits until the shutter button 262 is pressed (shutter button event). When the shutter button 262 is pressed, the procedure then proceeds to step S302.

(Step S302) The control part 204 issues a shooting command from the command list 131 c, and acquires a photographed image as an execution result.

(Step S303) The control part 204 issues a GPS command from the command list 131 c, and acquires position information as an execution result.

(Step S304) The control part 204 converts the position information of step S303 (latitude/longitude information or map data may be converted into address information) into characters, and combines them to a part of the photographed image of step S302.

(Step S305) The control part 204 issues the printing command 155, and prints a combined image by the printer 103.

Note that, each command (or event) to be issued is sent to the command processing part 17 of the C-function platform 16 (the C-function platform 251 in case of the electronic camera 101) of the own device or the other device. Here, an OS corresponds to the control part 204 of FIG. 6. Subsequently, the command processing part 17 issues a command to a device that executes the command (an internal command or an external command), and acquires an execution result.

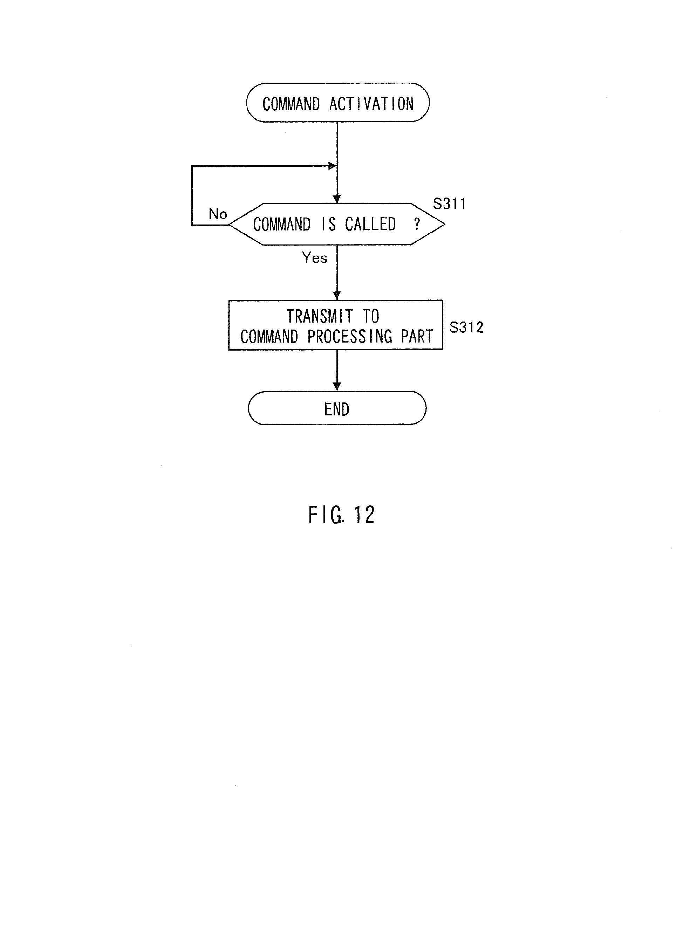

Processing of this OS is shown in a flow chart of FIG. 12.

(Step S311) An OS of each electronic device waits until a command is activated, and when the command is called, the procedure proceeds to step S312.

(Step S312) The OS transmits the called command to the command processing part 17.

In a manner described above, when the command registered in the command list is called, the command is sent to the command processing part 17 of each device regardless of the command being the internal command or the external command.

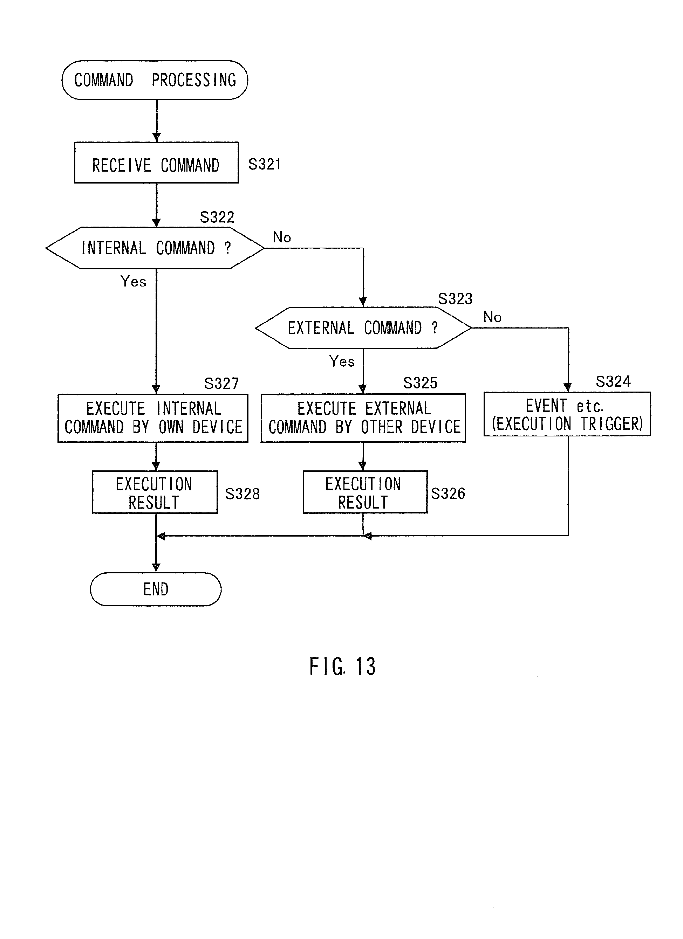

Next, operation of the command processing part 17 will be described using a flow chart of FIG. 13.

(Step S321) The command processing part 17 checks a command content (including an event) received from the OS.

(Step S322) The command processing part 17 discriminates whether or not the command is the internal command, and when it is the internal command, the procedure proceeds to step S327, and when it is not the internal command, the procedure proceeds to step S323.

(Step S323) The command processing part 17 discriminates whether or not the command is the external command, and when it is the external command, the procedure proceeds to step S325, when it is not the external command, the procedure proceeds to step S324.

(Step S324) When the command is neither the internal command nor the external command, the command processing part 17 processes the command as an event (execution trigger). For example, the command processing part 17 performs processing, such as press of the shutter button 262, or setting of a timer time.

(Step S325) The command processing part 17 executes the external command. In this case, the command processing part 17 transmits the command to other device corresponding to the external command instead of the own device, and the other device executes the command.

(Step S326) The command processing part 17 receives from the other device a result of having executed the external command by the other device.

(Step S327) The command processing part 17 executes the internal command. In this case, the command processing part 17 sends the internal command to the OS of the own device, and executes the command by the own device.

(Step S328) The command processing part 17 receives a result of having executed the internal command by the own device.

In a manner described above, the command processing part executes the command on the device corresponding to the command according to the internal command or the external command, and acquires the execution result.

### [Application example 1]

Next, an application example 1 of the embodiment described above will be described. Although all the electronic devices share the same command in description of FIGs. 2 and 9, a command can be made public with the command being limited in the application example 1.

As for limitation of a command, use of the command is limited by setting various public conditions, such as a type, an owner, a manufacturer, and a country of the electronic device, for example. The public conditions are set forth as additional information of each command of the command lists transmitted and received between the devices.

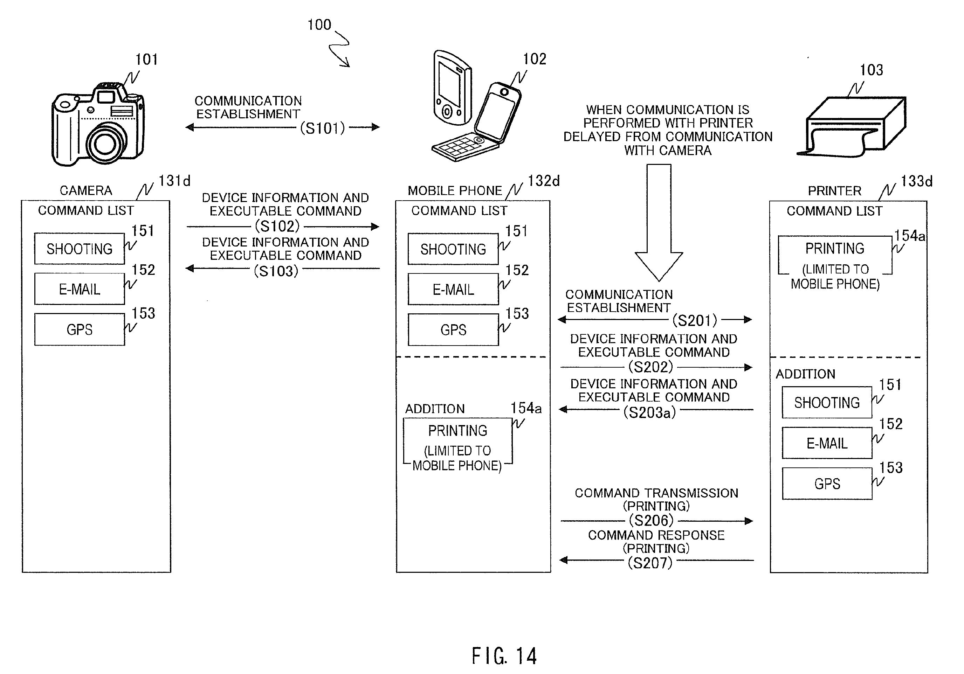

In an example of FIG. 14, publicity of a command is limited depending on the type of the electronic device. Note that in FIG. 14, blocks and signals that have the same symbols as FIG. 9 indicate the same as those in FIG. 9.

In FIG. 14, after communication is established between the electronic camera 101 and the mobile phone 102 (S101), device information and an executable command are transmitted and received (S102, S103). The command list 131 d of the electronic camera 101 obtained by the above includes three commands, i.e., the shooting command 151, the e-mail command 152, and the GPS command 153. In addition, three commands, i.e., the shooting command 151, the e-mail command 152, and the GPS command 153 that are set forth above a dotted line, are registered in the command list 132d of the mobile phone 102 at this time.

Subsequently, communication is established between the mobile phone 102 and the printer 103 (S201) a little delayed from communication establishment (S101), and device information and executable commands are transmitted and received between the mobile phone 102 and the printer 103 (S202, S203a). Here, unlike the printing command 154 of FIG. 9, information indicating the type (a mobile phone in FIG. 14) of the device that permits publicity of the command is added to the printing command 154a of the printer 103. Note that since recognizing that the device to share the command list is the mobile phone 102 from the device information received from the mobile phone 102 (S202), the printer 103 transmits a printing command 154a to the mobile phone 102 as one of the command lists (S203a).

Here, although in the example of FIG. 9, the mobile phone 102 transmits the added printing command 1 54 to the electronic camera 101 and the printing command 1 54 is added to the command list 131 c of the electronic camera 101, the mobile phone 102 does not transmit a list of the printing commands 154a to the electronic camera 101 since the printing command 1 54a is limited to the mobile phone in the case of FIG. 14.

In this case, the printing command 154a of the printer 103 cannot be utilized from the electronic camera 101, but the printing command 154a can be utilized between the mobile phone 102 and the printer 103, and the mobile phone 102 transmits the printing command 154a including image data to be printed to the printer 103 (S206), the printer 103 executes the printing command 1 54a, and a response of printing completion is sent to the mobile phone 102 as a reply after printing an image (S207).

In a manner described above, only specific electronic devices can utilize the command by limiting the publicity of the command. As a result of this, the number of the commands that each electronic device holds as the command lists is decreased, and a memory capacity can be reduced. Note that the electronic device (the printer 103 in the example of FIG. 14) that executes the command can perform setting and release of publicity limitation. Then, when publicity limitation is released, the electronic device then notifies the other device (the mobile phone 102 or the like) of the release. When publicity limitation is released, similarly to FIG. 9, the mobile phone 102 transmits information on the printing command 154a to the electronic camera 101, and the electronic camera 101 additionally registers the information in the command list 131 d thereof.

### [Application example 2]

Next, an application example 2 of the previously described embodiment will be described. Although in the description of FIGs. 2 and 9, the same command can be shared to be freely executed, a command can be executed by adding various conditions can be added thereto in the application example 2. Note that execution conditions of the command are the conditions given to a user of the command and, for example, include a billing condition and a point.

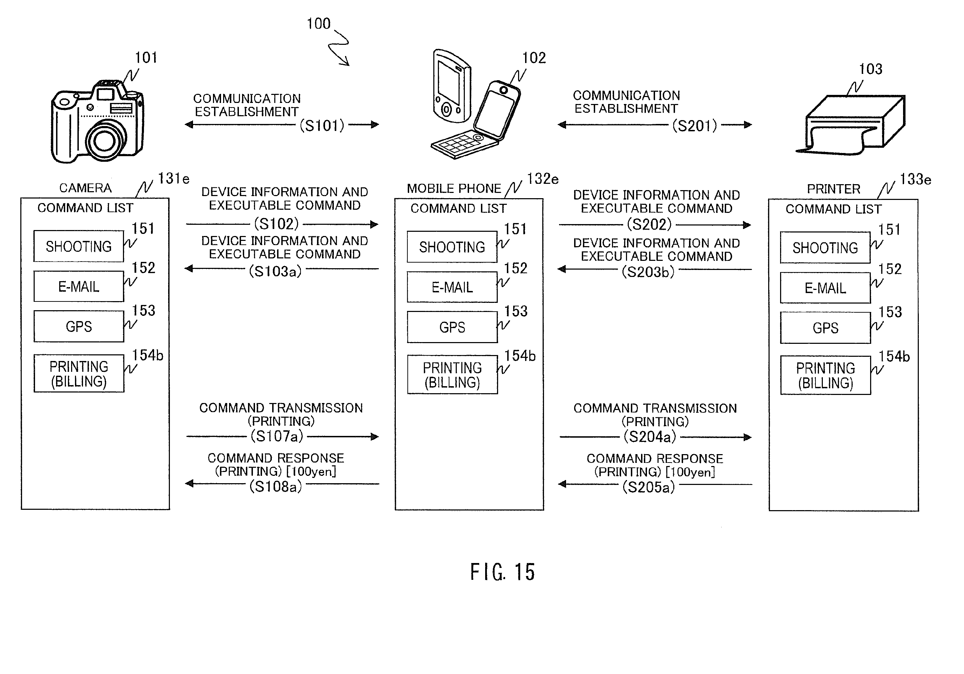

In an example of FIG. 15, a billing condition is added to a printing command 1 54b. Note that when transmitting device information and an executable command list to the mobile phone 102, the printer 103 transmits the billing condition together with the printing command 154b. Similarly, when transmitting device information and an executable command list to the electronic camera 101, the mobile phone 102 transmits the billing condition of the printing command 154b. In a manner described above, the printing command 154b to which the billing condition has been added is registered in the command lists (a command list 131e, a command list 132e, and a command list 133e in the example of FIG. 15) shared with each electronic device.

Subsequently, the electronic camera 101 executes the shooting command 151, and transmits the printing command 1 54b to the printer 103 (S107a). The printing command 154b is received by the mobile phone 102 similarly to the case of FIG. 2, and is transmitted again from the mobile phone 102 to the printer 103 (S204a). Subsequently, the printer 103 prints an image, and the printer 103 transmits a command response including information on printing completion and a printing fee (100 yen) to an issuer of the printing command 1 54b (S205a). This command response is transmitted to the electronic camera 101 via the mobile phone 102 (S108a), and the electronic camera 101 can confirm that the printing fee was 100 yen. Note that, as for payment of the printing fee, a user may go to a DPE shop that manages the printer 103 and pay in cash, or may debit the money from a previously registered bank account. Furthermore, an ID, a telephone number, an address, or the like of a user of the electronic camera 101, is included in the printing command 1 54, in the electronic camera 101 transmitting the printing command 1 54b to the printer 103, and thereby the DPE shop that manages the printer 103 can charge the user the printing fee.

As described above, the application example 2 can be utilized in various businesses and services by adding to the command conditions, such as a billing condition.

### [Application example 3]

Although in the previously described embodiment, the command list is acquired when communication is established with the other device, in the application example 3, a necessary command can be retrieved to acquire a list of only the required command. As a result of this, it becomes unnecessary to register an unnecessary command in the command list, and a memory capacity and an amount of communication information can be reduced.

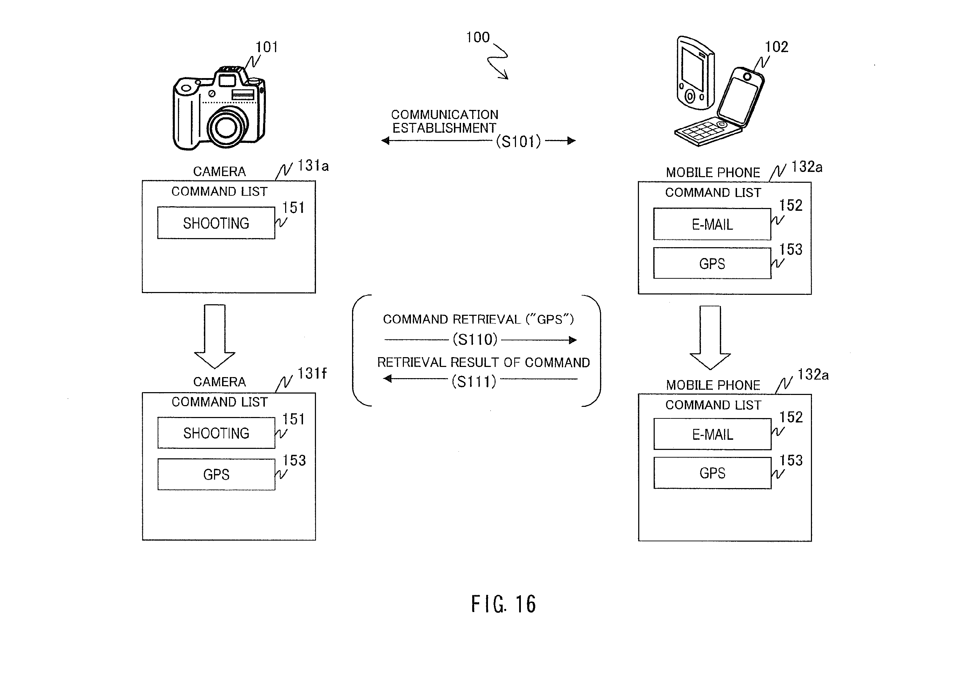

FIG. 16 is a diagram showing an example where command retrieval is performed between the electronic camera 101 and the mobile phone 102 in the electronic device cooperating system 100 according to the application example 3. Although in the example of FIG. 2, device information and executable command lists are transmitted and received between the electronic camera 101 and the mobile phone 102 (S102, S103) after communication establishment (S101), the command lists are not transmitted and received in the example of FIG. 16, and thus only the shooting command 151 of the internal command is registered in the command list 131 a of the electronic camera 101, and only the e-mail command 152 and the GPS command 153 as the internal commands are registered also in the command list 132a of the mobile phone 102.

Additionally, when utilizing an application that utilizes position information, the electronic camera 101, for example, transmits a command retrieval message in which "GPS" is a keyword to the other device with which communication has been established (S110). Subsequently, the mobile phone 102 having the GPS command 153 sends as a reply the command list (the GPS command 153) to the electronic camera 101 as a retrieval result (S111). Note that since the command retrieval message includes a source device ID and the like, the mobile phone 102 can transfer the command retrieval message to the plurality of devices, such as the printer 103 and the server 104, and acquire a necessary command list. Note that the command list 132a of the mobile phone 102 is not changed. In addition, in the example of FIG. 16, all the command lists sent as replies from the other devices that match a key word may be registered in a command list 131 f, or the electronic camera 101 may select a command to be registered in the command list 131 f.

In a manner described above, in the electronic device cooperating system 100 according to the application example 3, a necessary function in an own device can be retrieved from a command list of other device, and only a specified command can be taken in a command list, and it becomes unnecessary to hold an unnecessary command list.

### [Application example 4]

Although in the embodiment previously described in FIG. 10, commands and execution results are transmitted and received to/from the other device one for one, in the application example 4, nesting that includes a command in a command can be performed so as to be able to deal with batch processing or the like. As a result of this, a program becomes simple, and the number of times of transmission and reception between the devices can be reduced.

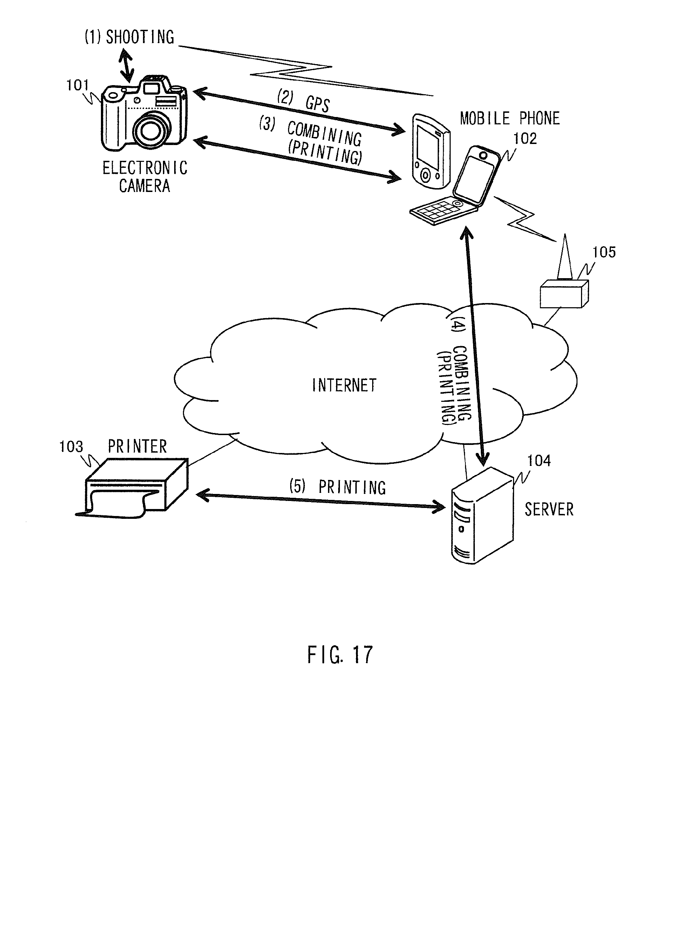

FIG. 17 is a diagram showing an operation procedure of the electronic device cooperating system 100 according to the application example 4, and similarly to FIG. 10, it corresponds to such a utilization scene that "An image photographed by the electronic camera 101 at a sightseeing spot is combined with position information, and a photographer prints the combined image by the printer 103 that is located in his/her house". Here, the four electronic devices of FIG. 17 are in a state where they mutually transmit and receive device information and command lists, and share the same command lists with one another. Available commands in this case are three commands: the shooting command 151 of the electronic camera 101; the GPS command 153 of the mobile phone 102; and the printing command 1 54 of the printer 103, and a combining command 1 55 of the server 104.

Hereinafter, operation of FIG. 17 will be described in order. Note that the following (10) to (14) correspond to (1) to (5) of FIG. 17.
(10) When a photographer presses the shutter button 262 of the electronic camera 101, the electronic camera 101 executes the shooting command 151, and takes a photographed image into the buffer 203.
(11) The electronic camera 101 transmits the GPS command 153 to the mobile phone 102, and acquires position information (latitude/longitude information or address information converted with map data) that the mobile phone 102 has acquired.
(12) The electronic camera 101 transmits the combining command 155 to the mobile phone 102. Here, the combining command 155 includes the printing command 154. In addition, the combining command 155 includes image data photographed in (10), and the position information acquired in (11).
(13) Since the combining command 155 (the printing command 154 is included) is not the internal command of the own device, the mobile phone 102 transfers the combining command 155 via a network to the server 104 that is the device to execute the combining command 155. Subsequently, the server 104 executes the combining command 155 that is the internal command of the own device, and acquires an image as an execution result in which the photographed image is combined with the position information. Furthermore, since the combining command 155 includes the printing command 154, the server 104 transmits the printing command 154 including the combined image to the printer 103.
(14) The printer 103 executes the printing command 154 that is the internal command of the own device, and prints the photographed image combined with the position information.

Note that similarly to the example of FIG. 10, the printer 103 sends as a reply a response indicating printing completion to the server 104, and the server 104 transfers the response indicating printing completion via the mobile phone 102 to the electronic camera 101 that is an issuer of the combining command 155 that has included the printing command 154. As a result of this, the electronic camera 101 displays on the display part 206 a message indicating that the printer 103 in the house has normally printed the photographed image, and the photographer can confirm the display.

As described above, nesting that includes a command in a command can be performed in the application example 4. As a result of this, a program becomes simple, and the number of times of transmission and reception between the devices can be reduced. Note that although in the example of FIG. 17, the example has been shown where the external command of another device (the printer 103) is included in the external command (server 104), the external command may be included in the internal command, or nesting of the external command of the same other device may be performed.

### [Application example 5]

In the respective embodiments described above, although the example has been shown where the command is transmitted to the other device and the execution result of the other device is received. In the application example 5, the example will be described where an event that gives a timing to execute a command is transmitted. As a result of this, it becomes unnecessary to issue a command in real time, and a processing burden of a command issuer can be reduced.

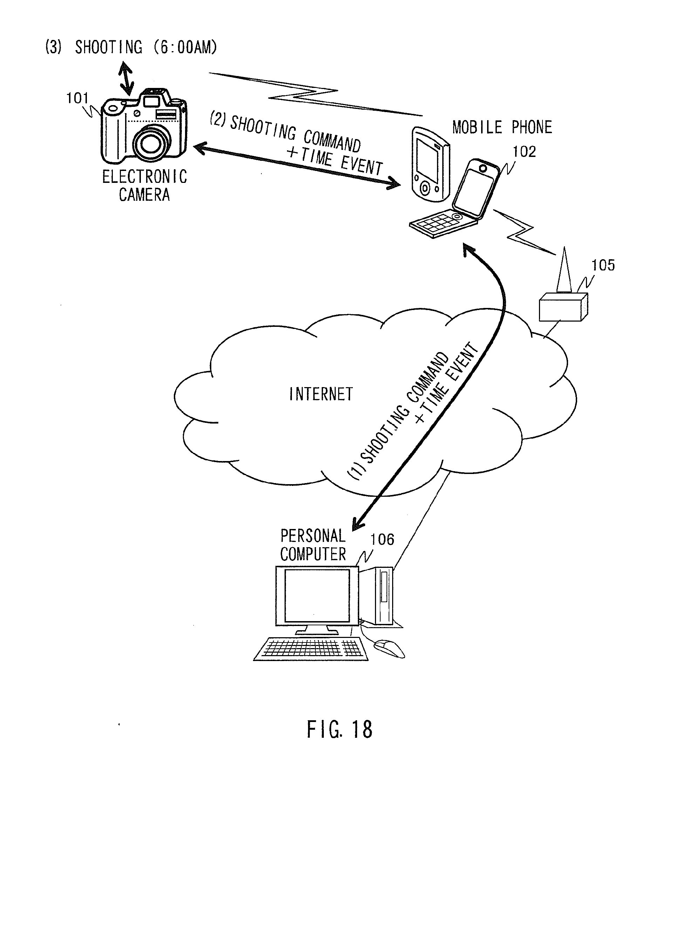

Here, FIG. 18 is a diagram showing an operation procedure of the electronic device cooperating system 100 according to the application example 5, and for example, such a utilization scene that "An image photographed by the electronic camera 101 installed in a remote place is viewed on a personal computer 106 in a photographer's house". The electronic camera 101 and the personal computer 106 of FIG. 18 are in a state of being mutually connected via the mobile phone 102, and sharing a same command list. Available commands in this case are the shooting command 151 of the electronic camera 101, and a time event. Here, the shooting command 151 is the same as the command described in FIG. 2 and the like. In addition, the time event is the event that causes a specified command to be executed at a specified time and, for example, the time event includes an execution command (the shooting command 151 in an example of FIG. 18), and an execution time (AM 6:00 in the example of FIG. 18).

Hereinafter, operation of FIG. 18 will be described in order. Note that the following (20) to (22) correspond to (1) to (3) of FIG. 18.
(20) The personal computer 106 transmits the time event including the shooting command 1 51 to the mobile phone 102.
(21) The mobile phone 102 transfers to the electronic camera 101 the time event including the shooting command 151 received from the personal computer 106.
(22) The electronic camera 101 waits until the execution time (AM 6:00) of the command included in the time event, executes the shooting command 154 when a clock inside the electronic camera 101 reaches AM 6:00, and takes a photographed image in the buffer 203. Subsequently, the electronic camera 101 adds image data taken in the buffer 203 to a response indicating shooting completion, and sends the response as a reply to the personal computer 106 via the mobile phone 102. As a result of this, it is possible to view the photographed image on the screen of the personal computer 106.

As described above, in the application example 5, it becomes unnecessary to issue a command in real time by transmitting the event that gives the timing to execute the command, and a processing burden of a command issuer can be reduced.

### [Application example 6]

Next, an example will be described where a GUI (Graphical User Interface) function is given to a device without a GUI. As a result of this, operability of the device on which only a simple button is mounted can be improved, and utilization of various functions and complex setting can be easily performed. In the application example 6, an example will be described where function setting of the printer 103 without a manipulation interface is performed by the mobile phone 102 having a GUI interface function, such as a touch panel.

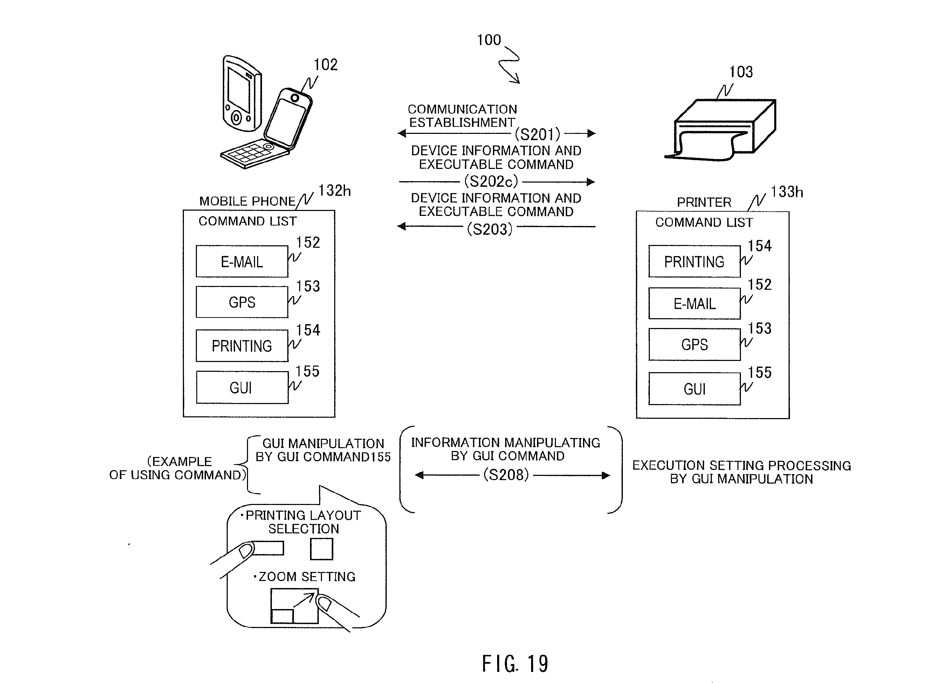

FIG. 19 is a diagram showing an example where a GUI command is utilized between the mobile phone 102 and the printer 103 in the electronic device cooperating system 100 according to the application example 6. Components other than a GUI command 155 of the mobile phone 102 are the same as in the example of FIG. 9. In FIG. 19, device information and executable command lists are transmitted and received between the mobile phone 102 and the printer 103 (S202c, S203) after communication establishment (S201), the e-mail command 152, the GPS command 153, the GUI command 155, and the printing command 154 are registered in a command list 132h of the mobile phone 102, and a command list 133h of the printer 103.

Here, the GUI command 155 is the command that provides a function to display a setting menu list received from the other device (printer 103) on a screen 156 of the own device (mobile phone 102), or a function to send as a reply to the other device information of an item on the touch panel screen 156 selected with a finger. In the example of FIG. 19, a menu screen of printing layout selection and zoom setting of the printer 103 is displayed on a screen 156 of the mobile phone 102. Subsequently, a user of the printer 103, for example, touches with a finger to select a layout A in a graphic screen that visually displays states of printing layouts. Alternatively, the user enlarges with a finger a printing image that visually displays a zoom state, and performs zoom setting while confirming a numerically displayed zoom magnification ratio. Note that the mobile phone 102 sends manipulation information by the GUI command 155 to the printer 103, and conversely, the printer 103 sends information on the menu screen and the like to the mobile phone 102 (S208).

As described above, in the electronic device cooperating system 100 according to the application example 6, the GUI function can be given to the device (printer 103) without the GUI, and operability of the device on which only the simple button is mounted can be substantially improved.

### [Other example]

Hereinbefore, although various application examples have been described, the following applications can be made other than the above.
(1) It is also possible that an ordinary mobile phone with camera and a smartphone having a 3D function cooperate with each other, a camera of the mobile phone and a camera of the smartphone are installed with a predetermined parallax, and that the smartphone converts into a 3D image two images simultaneously photographed by both devices.
   In this case, the mobile phone and the smartphone share the respective shooting commands with each other, and both the mobile phone and the smartphone simultaneously execute the shooting commands, for example, with press of the shutter button of the smartphone being set as an event.
(2) It is also possible that the electronic camera 101 and a video recorder are made to cooperate with each other to execute a recording command of the video recorder, with press of the shutter button 262 of the electronic camera 101 being set as an event.
(3) It is also possible that the electronic camera 101 and the server 104 on the Internet are made to cooperate with each other, the electronic camera 101 transmits a photographed image to the server 104 whenever shooting an image, and that the server 104 applies appropriate image processing to the photographed image and saves it.

In this case, since the electronic camera 101 does not need an image processing engine, a memory, and the like, and may just need an imaging part including an optical system and the like and a circuit corresponding to the C function, a very inexpensive camera can be provided. In addition to that, since the electronic camera 101 may just be connected to the Internet through the mobile phone 102 as in FIG. 10, a network connection function also need not be mounted.

Note that although the above-described each embodiment has been described by taking the electronic camera 101, the mobile phone 102, the printer 103, and the server 104 as examples of electronic devices, electronic devices other than these may be used. For example, a television, a recording device, a game device, a portable music player, a personal computer, or the like may be used. Alternatively, may be used home appliances, such as a refrigerator, an air conditioner, a rice cooker, and a cleaner; a device provided with biological sensors, such as a bathroom scale, a sphygmomanometer, a heartbeat sensor, and a thermography camera; an automobile; or the like. In this case, a refrigerator and a camera can be made to cooperate with each other to achieve a function to photograph an image whenever a door of the refrigerator is opened, or a game machine and a device provided with a biological sensor can be made to cooperate with each other to achieve a function to monitor change of a heart rate, body temperature, or the like of a user playing a game. Alternatively, a human detection sensor of an air conditioner can also be utilized and, for example, the air conditioner and the camera can be made to cooperate with each other to achieve a function to take a picture with the camera when a human is detected with a human detection sensor, and thus cooperation of the air conditioner and the camera can be utilized as a security device.

### [Display method of command]

Next, a display method of a command will be described. As for commands available for each device, for example, when the device is the one having the GUI interface, icons of available commands are displayed on a screen as described in FIG. 7. Additionally, when an available command increases whenever the device receives a command list after communication is established with other device, an icon is added to the screen. Note that the same can be applied to a character list display indicating a command name, instead of the icon display.

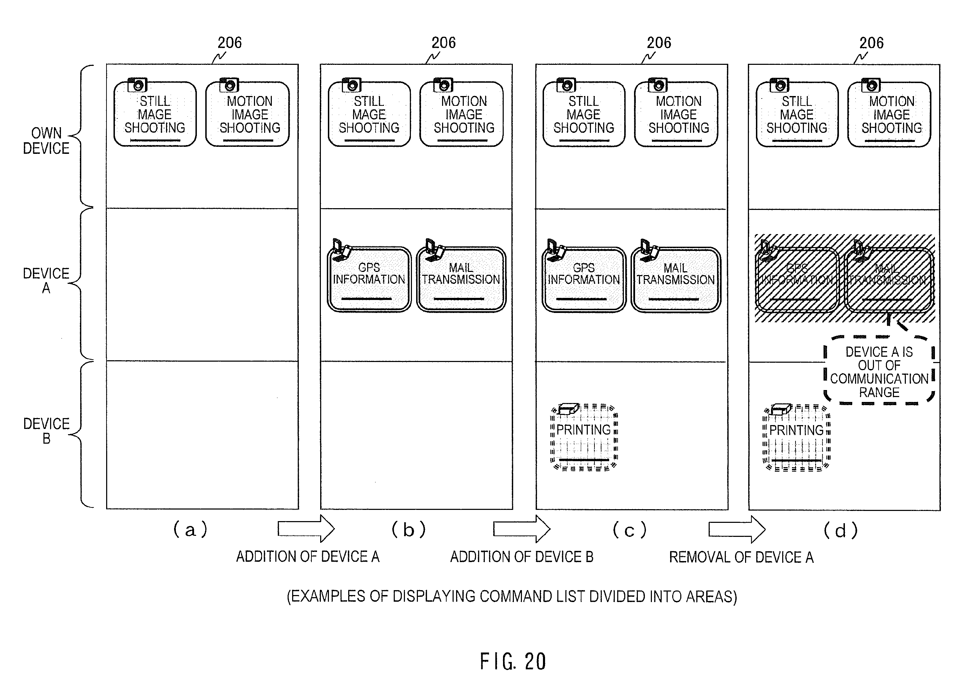

For example, in case of FIG. 20, command lists (icons) are displayed on a screen of the display part 206 (a display part of the other device may be used) of the electronic camera 101, the command lists (icons) being divided into areas for every device. Note that display area may be divided according to color for every device. For example, FIG. 20(a) shows a state before communication is established with other devices, and commands (a still image shooting command and a motion image shooting command in an example of FIG. 20(a)) of an own device are displayed in the display area of the own device. Next, in FIG. 20(b), communication with a device A (for example, a mobile phone) is established, and commands (a GPS information command and a mail transmission command in an example of FIG. 20(b)) of the device A are displayed in a command display area of the device A. Furthermore, in FIG. 20(c), communication with a device B (for example, a printer) is established, and a command (a printing command in an example of FIG. 20(c)) of the device B is displayed in a command display area of the device B.

As described above, an icon of an available command is added whenever the own device receives a command list after communication is established with the other device. Conversely, when a power supply of the other device is turned off, when the own device and the other device are located too far away from each other to perform communication, when a user of the other device intentionally does not permit use of a command, or the like, the command of the device is deleted from the command list. Alternatively, a user of the own device may intentionally delete the added command of the other device. In this case, the user may just select the command on a touch panel or the like, and may just select deletion, for example, on a processing selection screen (selection screen of deletion, usage, parameter, and the like) displayed by pop-up. In any case, when the command is no longer available, unavailability is displayed so that the user can understand it. For example, FIG. 20(d) shows a state where the commands of the device A cannot be utilized, and the commands of the device A become a state of being grayed out. Alternatively, a whole command display area of the device A may be grayed out, or a × mark may be displayed. Furthermore, as shown in FIG. 20(d), a message indicating that the commands cannot be used may be displayed. For example, a message "The device A is out of communication range." is displayed in FIG. 20(d). In addition, when a state where a command cannot be used continues for a previously set period, an icon of the command may be erased from the screen of the display part 206.

Here, when a command exists that the user has ever received from the other device at least once in the past even though communication is not established, an icon of the command may be displayed on the display part 206. In addition, although the icons of the commands that the user cannot use are grayed out in the above-described example, the icons may be darkly displayed, or may be highlighted (increased in size or the like). Conversely, an icon of an available command may be brightly displayed, or a shape thereof may be changed. In addition, icons may be classified according to color for every device, or a connected device and an unconnected device may be displayed classified according to color. Alternatively, image effects, such as vibrating an icon of a command that can newly be used by animation, or shining it, may be given to the icon.

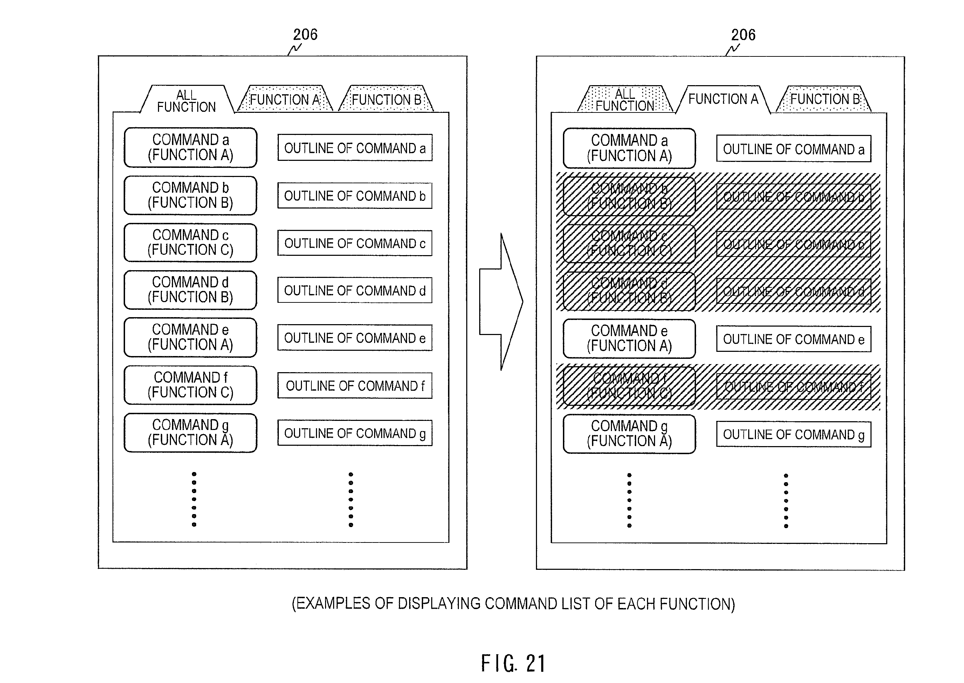

Next, there will be described one example of a retrieval method and a display method of a command list. FIGs. 21(a) and 21(b) show examples of retrieving commands with specific function (for example, a GPS-related command and an image processing-related command) in a command list by selecting a tab arranged in an upper part of the command list displayed on the screen of the display part 206 (a display part of the other device may be used) of the electronic camera 101. FIG. 21(a) shows a state where a tab to display all functions is selected, and all available command lists (from a command a to a command g) of a plurality of functions (a function A, a function B, a function C, and the like) are displayed. In addition, FIG. 21(b) shows a state where a tab of the function A is selected, and available command lists (the command a, a command e, and the command g) related to the function A is displayed. At this time, command names and icons other than the function A may be grayed out. As a result of this, a user can easily know the available commands. Particularly in the example of FIG. 21(b), the displayed command names and display positions of the icons are not changed, and thus user's confusion can be avoided. Here, colors and sizes of the command names and the icons of the function A and the other functions may be changed without graying out the command names and the icons other than the function A.

### [Basic function of command connection]

Next, an example will be described where a specific function is achieved by combining a plurality of commands to make them cooperate with each other. Here, as described in FIGs. 7 and 20, the GUI interface can be used that displays each command on the display part 206 (a display part of the other device may be used) of the electronic camera 101 by an icon. Consequently, the plurality of commands is made to cooperate with one another to execute processing in order like batch processing by aligning icons on the screen of the display part 206 to be coupled with one another.

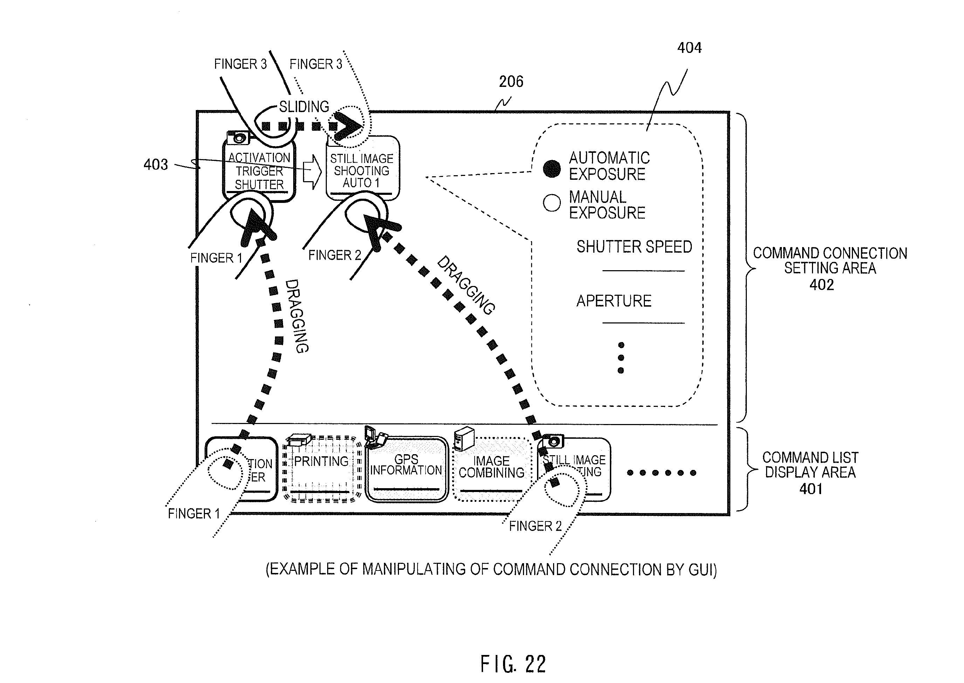

Here, there will be described one example of manipulation to combine the plurality of commands. In an example of FIG. 22, the manipulation part 205 includes a touch panel manipulation interface, and the screen of the display part 206 is displayed divided into a command list display area 401 and a command connection setting area 402. A user then touches icons of various commands displayed on the command list display area 401 with a finger to select, and drags the selected icon to the command connection setting area 402 as it is to arrange there. For example, in FIG. 22 the user drags and arranges an icon of an activation trigger with a finger 1, and then drags and arranges an icon of still image shooting with a finger 2 to arrange. Subsequently, when the user slides the icon of the activation trigger to the icon of still image shooting with a finger 3, an arrow 403 for command coupling is displayed. The plurality of commands can be coupled by repeating similar manipulation. Note that when branching according to a set condition, the commands can be coupled by a plurality of arrows according to a branching direction.

Here, as for parameter input of a command, for example, as shown in FIG. 22, if the user touches (or clicks) an icon for setting a parameter, a pop-up window 404 is displayed, and the user can set a parameter related to the icon. Furthermore, a function, a usage, or the like of a command may be displayed, for example, by double-clicking on an icon. As a result of this, even though a command is the first one to be used, the user can use it easily. Furthermore, an image indicating a shape of a device may be displayed on a part of an icon of a command so that the user can understand the device that executes the command, or a shape of the icon itself is set as an image or an illustration of the device.

In a manner described above, the plurality of commands can be made to cooperate with one another to freely achieve specific functions.

### [Application example of command connection]

Next, there will be described an application example of command connection using the GUI interface. As described in FIGs. 7 and 20, when a GUI screen is displayed on the display part 206, and a command can be displayed by an icon, original functions that cannot be achieved by a single command can be achieved by combining the icons of the plurality of commands to make in cooperate with one another on a GUI screen. Particularly, higher functions can be achieved by combining not only simple operation commands but also a logical expression, a WAIT function, and the like.

Hereinafter, several examples will be described where the icons of the plurality of commands are combined to make cooperate with one another on the GUI screen.

### (Example 1 of GUI command connection)

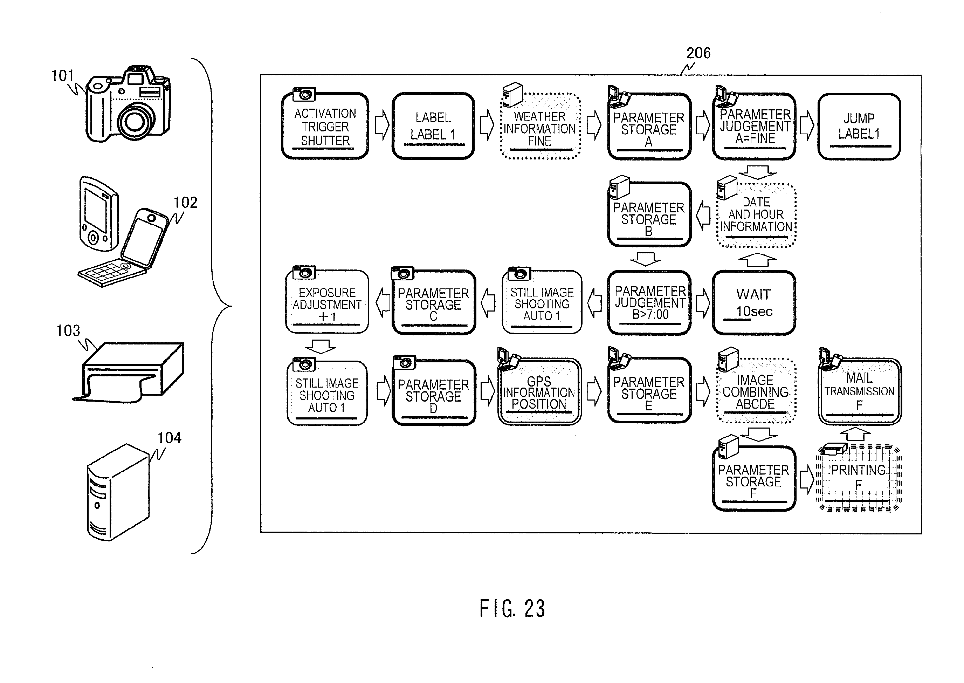

FIG. 23 is a diagram showing one example where icons of a plurality of commands are combined to make cooperate with one another in the previously described configuration (the electronic camera 101, the mobile phone 102, the printer 103, and the server 104) of FIG. 17. On a use assumption scene in this cases the following: a photographer performs automatic shooting of Mt. Fuji on a fine morning twice in a state where exposure is changed using the electronic camera 101 installed so that a specific object (Mt. Fuji or the like) can be photographed; the mobile phone acquires GPS information on the spot; one image is combined (laid out) with the GPS information by an image combining function of the server 104 on the Web; subsequently, the printer 103 prints the image; and the mobile phone 102 can transmit the combined image to a specified address by an e-mail. There will be described command connection for executing such a series of processing.

On a GUI screen displayed on a display part 205 of the electronic camera 101 of FIG. 23, first, press of a release button of the electronic camera 101 generates an event of an "Activation trigger: SHUTTER". Subsequently, although a "weather information acquisition command" of the server 104 on the Web is executed in order to discriminate whether it is a "fine morning", a "Label: LABEL1" indicating a jump destination is arranged between the "Activation trigger" and the "weather information acquisition command". The weather information acquired by the "weather information acquisition command" is stored in a parameter A by processing of the mobile phone 102 "Parameter storage: A", and processing is branched by a "Parameter judgement: A=FINE" according to whether or not the weather information stored in the parameter A is fine. Note that an arrow indicating a branching destination may be classified according to color depending on a determination result of Yes or No, or the arrow may be displayed together with "Yes" or "No". In addition, a user performs setting of a branch condition of "Yes" or "No" by the following, for example, when a user touches (or clicks) the arrow, a pop-up menu is displayed, and thus the user selects a menu from a menu list. In the example of FIG. 23, when it is fine, the procedure executes the "date and hour information acquisition command" of the server 104, and when it is not fine, the program executes a "Jump: LABEL1" to return to the "Label: LABEL1", and the procedure repeats similar processing until the weather becomes fine.

When it is fine, date and hour information acquired by the "date and hour information acquisition command" of the server 104 is stored in a parameter B by processing of the server 104 "Parameter storage: B", and processing is branched according to whether or not the date and hour information stored in the parameter B indicates after 7:00. When the date and hour information indicates after 7:00, the procedure executes a "Still image shooting command: AUTOMATIC 1 (for example, autofocus)", and when it indicates before 7:00, the procedure waits for ten seconds by a "WAIT: 10 seconds", and executes the "date and hour information acquisition command" again. Here, when the procedure returns from the previous "Parameter judgement: A=FINE" to the "weather information acquisition command", they are coupled by icons of the "Jump: LABEL1 " and the "Label: LABEL1", but when icons are located close to each other like the "date and hour information acquisition command" and the "WAIT: 10 seconds", they may be directly coupled by an arrow. In the example of FIG. 23, the procedure waits until it is past 7:00.

When it is past 7:00, the procedure executes the "Still image shooting command: AUTOMATIC 1" of the electronic camera 101, and stores the photographed image in a parameter C by a "Parameter storage: C". Subsequently, the procedure performs processing that sets +1 to the exposure by an "Exposure adjustment command: +1" of the electronic camera 101, executes the "Still image shooting command: AUTOMATIC 1" again to photograph a second image, and stores the photographed image in a parameter D by a "Parameter storage: D".

Subsequently, the procedure executes the "GPS information command" of the mobile phone 102, and stores the acquired GPS information (position information and the like) in a parameter E by a "Parameter storage: E". Furthermore, the procedure executes an "Image combining command: ABCDE" that combines the pieces of information (the parameters A, B, C, D, and E) acquired by the processing so far into one image on the server 104, and stores the combined image in a parameter F by a "Parameter storage: F". After executing a "Printing command: F" of the printer 103 to print the image stored in the parameter F, the procedure executes a "Mail transmission command: F" of the mobile phone 102 to transmit the combined image stored in the parameter F to the specified address.

In a manner described above, an original application function can be easily achieved by coupling the icons of the plurality of commands of the plurality of devices on the GUI screen. Particularly, coupling manipulation of the commands through the GUI screen of FIG. 23 may be performed on a liquid crystal display of the electronic camera 101 or the mobile phone 102, or may be performed on a liquid crystal display of the printer 103 or on the server 104. In addition, a person may manipulate the shutter button of the electronic camera 101, or a specific button of the mobile phone 102 and a printing button of the printer 103 may be allocated to the shutter button of the electronic camera 101 to be operated by remote control. In this case, a parameter of the event of the "Activation trigger: SHUTTER" may be set to be able to specify a button of the other device, or a command may be arranged that acquires manipulation information of the button of the other device instead of the event of the "Activation trigger: SHUTTER".

### (Example 2 of GUI command connection)

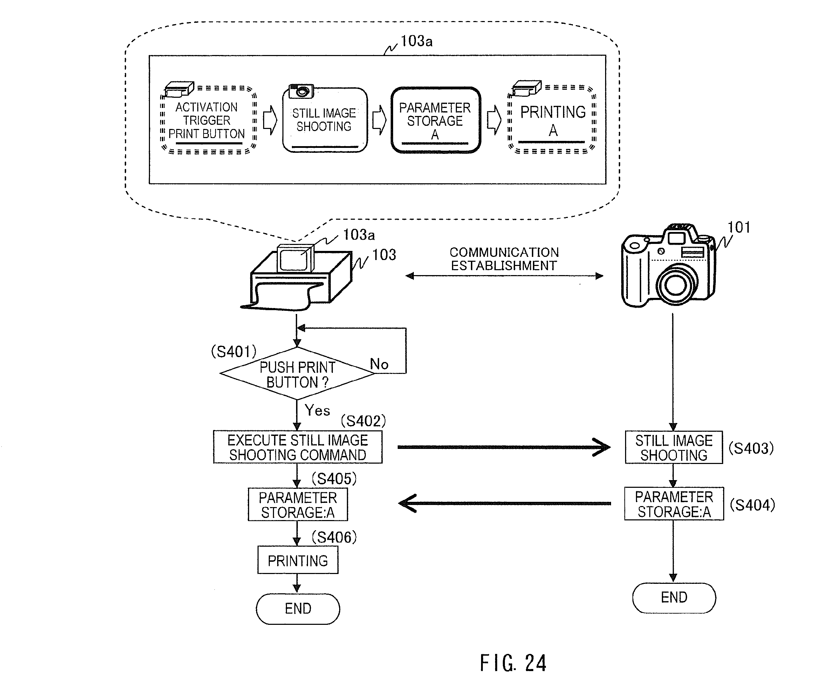

Next, there will be described an example of GUI command connection manipulated from the printer 103. FIG. 24 shows an application that utilizes the printing button of the printer 103 as the shutter button of the electronic camera 101 using the printer 103 and the electronic camera 101. In this case, the GUI performs command coupling manipulation, with a liquid crystal display 103a of the printer 103 being set as a display part (corresponding to the display part 206 of the electronic camera 101).

In the example of FIG. 24, the procedure starts processing by an event of an "Activation trigger: PRINTING BUTTON". Note that it is assumed that between the printer 103 and the electronic camera 101, communication is established, and mutual command lists are transmitted and received similarly to the previous example.

(Step S401) The procedure discriminates whether or not the printing button of the printer 103 has been pressed. When the printing button has been pressed, the procedure proceeds to step S402, and when the printing button has not been pressed, the procedure waits until the printing button is pressed in step S401.

(Step S402) The printer 103 executes a "still image shooting command". Since this "still image shooting command" is not an internal command of the own device, the printer 103 transfers the "still image shooting command" to the electronic camera 101 that is the device that executes it.

(Step S403) The electronic camera 101 executes the "still image shooting command" that is an internal command of the own device transferred from the printer 103. (Step S404) The electronic camera 101 stores a photographed image in the parameter A. Subsequently, the electronic camera 101 transmits the image stored in the parameter A to the printer 103 that is a transfer source of the "still image shooting command".

(Step S405) The printer 103 receives from the electronic camera 101 a parameter A that is an execution result of the "still image shooting command".

(Step S406) The printer 103 prints the image stored in the parameter A.

In a manner described above, a user can photograph an image by the electronic camera 101 located at a distant place and print the photographed image only by performing manipulation from the printer 103, and pressing the printing button. In this case, shooting conditions, such as exposure, may be set to be able to be changed by a cursor button of the printer, or the like.

### (Example 3 of GUI command connection)

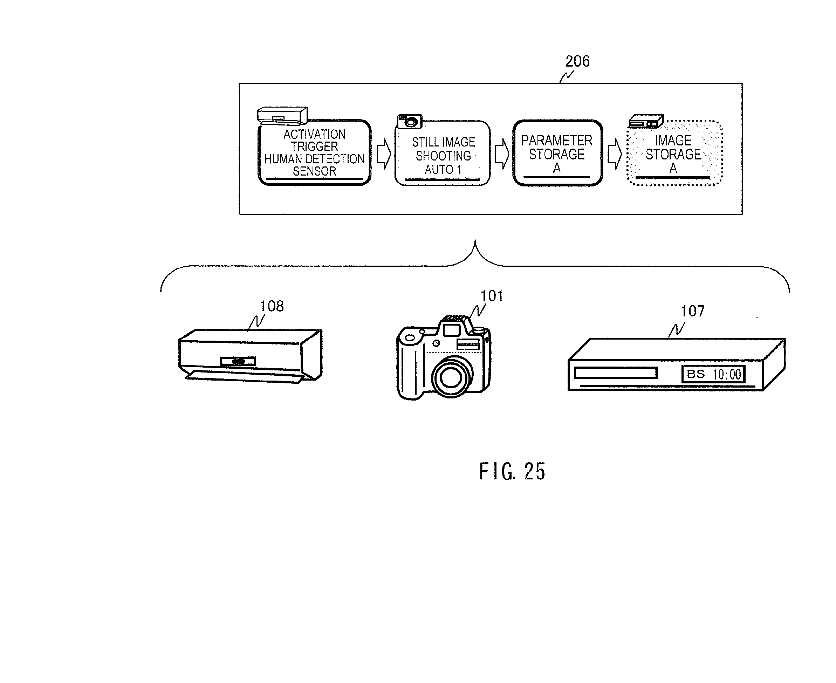

FIG. 25 shows an example where an image photographed by the electronic camera 101 is saved as it is in a recording device 107 when the electronic camera 101, the recording device 107, and an air conditioner 108 with human detection sensor are made to cooperate with one another, and the human detection sensor of the air conditioner 108 detects a human.

On a GUI screen displayed on the display part 206 of the electronic camera 101 of FIG. 25, first, an event of an "Activation trigger: SHUTTER" is generated when a human is detected by the human detection sensor of the air conditioner 108. The event of the "Activation trigger: SHUTTER" causes the "Still image shooting command: AUTOMATIC 1" of the electronic camera 101 to be executed. Subsequently, a photographed image is temporarily taken in an internal buffer or the like as the parameter A by processing of the electronic camera 101 "Parameter storage: A". Furthermore, the image stored in the parameter A is transmitted to the recording device 107, and saved in a hard disk or the like of the recording device 107.

In a manner described above, the image photographed by the electronic camera 101 when the human detection sensor of the air conditioner 108 detects the human, can be saved in the recording device 107. In this case, a system of FIG. 25 can be used as a monitoring camera system that detects entering of a suspicious individual and photographs an image thereof.

### (Example 4 of GUI command connection)

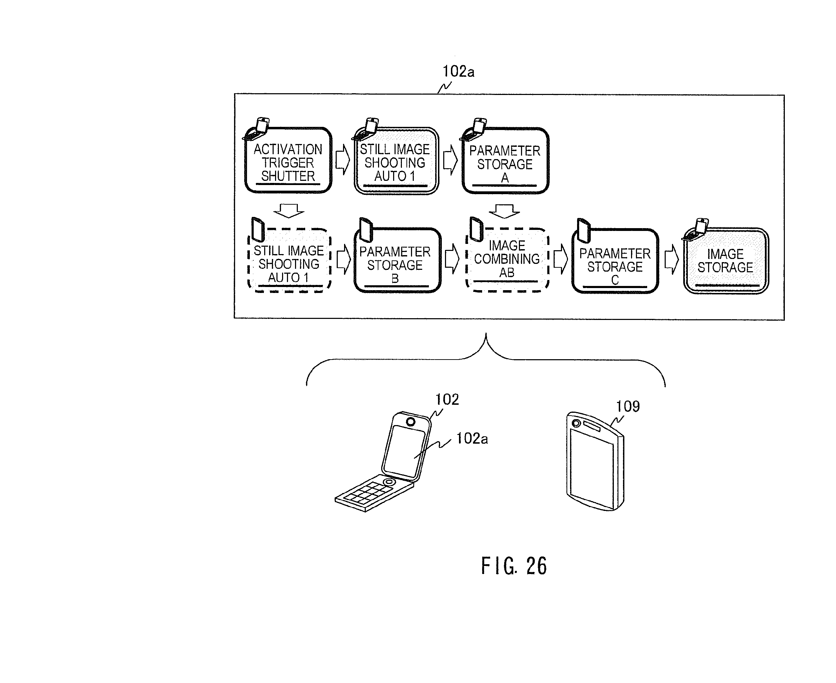

FIG. 26 shows an example where the mobile phone with camera 102 and a smartphone with camera 109 are made to cooperate with each other, a same object is photographed by both cameras, and where a stereo image is synthesized with image processing software in the smartphone 109. In this case, for example, a photographer has the mobile phone 102 and the smartphone 109 in his both hands, and causes a trigger of a shutter by a button of the mobile phone 102.

On a GUI screen displayed on a liquid crystal display 102a of the mobile phone 102 of FIG. 26, first, press of a shooting button of the mobile phone 102 generates an event of "Activation trigger: SHUTTER". The event of the "Activation trigger: SHUTTER" executes the internal command of the mobile phone 102 "Still image shooting command: AUTOMATIC 1", and stores a photographed image in the parameter A by the "Parameter storage: A". Simultaneously, the event of the "Activation trigger: SHUTTER" executes the external command of the smartphone 109 "Still image shooting command: AUTOMATIC 1", and stores a photographed image by the smartphone 109 in the parameter B by the "Parameter storage: B". Subsequently, the smartphone 109 executes an "Image combining command: AB", combines the image stored in the parameter A and the image stored in the parameter B to form a stereo image as a parallax image, and stores it in the parameter C by the "Parameter storage: C". Furthermore, the stereo image stored in the parameter C is saved in the mobile phone 102.

In a manner described above, a stereo image can be photographed by making two cameras cooperate with each other.

### (As for other examples)

As an example other than the above, the smartphone 109 without memory interface, and the printer 103 with memory interface are made to cooperate with each other, and thus it is possible to read or view images stored in a USB memory connected to the printer 103 by the smartphone 109. Furthermore, it is also possible to manipulate an image selected from the viewed images by the smartphone 109 and print it by the printer 103.

Alternatively, by cooperating with an e-mail function of the mobile phone 102, it is also possible to view an e-mail received by the mobile phone 102 from the printer 103, or to select and print an image attached to the e-mail.

In addition, it is also possible to access the Internet through a display monitor of the printer 103. In this case, an internet access function (for example, a net access command) of the mobile phone 102 or the like is utilized from the printer 103 to connect the printer 103 to the Internet, Internet information can be displayed on the display monitor of the printer 103, and it is also possible to print the Internet information as it is using the printing button.

Furthermore, the printer 103 and a television are made to cooperate with each other, a screen of television broadcasting is displayed on a monitor screen of the printer 103, and a function to print a television screen can also be achieved by pressing the printing button as it is.

Similarly, the printer 103 and a game device are made to cooperate with each other, a screen of the game device is displayed on the monitor screen of the printer 103, and a function to print the game screen can also be achieved by the press of the printing button.

Hereinbefore, as the examples of command connection by the GUI having been described, the plurality of commands of the plurality of devices can be made to cooperate with one another to achieve arbitrary various functions by a simple manipulation that only arranges the icons of the commands and couples them on the screen of a display device of each device.

Note that colors, shapes, sizes, or the like of icons of commands being executed may be changed, or may be displayed by animation so that the user can understand the commands being executed in the middle of executing the plurality of commands by command connection by the GUI. The animation display may be performed by vibrating or brightening the icons, or when the icons are displayed by images or illustrations indicating shapes of the devices, an operating portion (for example, a shutter button) may be displayed as moved by animation. As a result of this, a user can easily recognize a command being executed and an execution content.

Hereinbefore, as described in each embodiment, with an electronic device, an electronic device cooperating system, and an electronic device controlling method according to the present invention, the following effects can be obtained.
- Since device information, executable commands, and an event are shared among electronic devices having a similar communication unit and a command sharing function, and a command of other device can be used similarly to a command of an own device, a function of the other device that the own device does not have can be taken in as a function of the own device.
- Since each command is executed on a device that can execute the command, various functions can be achieved without depending on a CPU or an OS of the own device.
- Since parameters, such as a reply destination device ID (command source ID) for sending as a reply an ID of the device that executes the command, and an execution result of the command, are included in the command itself, a function of a device with which communication cannot be directly performed can be utilized by transferring the command among the plurality of devices.
- An internal command and an external command can be executed in a same procedure without distinguishing them.
- Even when a device is added, control information on the added device can be shared with all the connected devices.
- A function necessary for the own device is retrieved from a command list of the other device, only a specified command can be taken in a command list, and there is no need to hold an unnecessary command list.
- Since the command itself holds information, such as a function of its own, a parameter, or a usage, a type of reply data, there is no need to examine the usage of the command, and the function of the other device can be easily utilized.
- Since nesting (batch processing) of the command can be performed, for example, functions of the plurality of devices can be combined to achieve a new function.
- Since the command is executed by setting an event as a trigger, there is no need to manage a timing to execute the command by the own device, and the procedure can wait until a command response including an execution result is received from the other device, or can perform another processing.
- Since an applicable range of commands (a type of command made public to the other device) can be specified, a function desired not to be utilized by an unspecified number of devices can be protected.
- In addition, the electronic device, the electronic device cooperating system, and the electronic device controlling method according to the present invention can be utilized for various businesses and services by applying additional information, such as a billing condition.

Note that although the electronic device, the electronic device cooperating system, and the electronic device controlling method according to the present invention have been described taking the example in each embodiment, the present invention can be carried out in other various forms without departing from the spirit or the main feature. Therefore, the above-mentioned embodiments are mere illustrations at all points, and they must not be interpreted in a limited way. The present invention is shown by claims, and the present invention is not constrained at all by a specification text. Furthermore, all the modifications and changes belonging to an equal range of claims fall within the scope of the present invention.

### EXPLANATION OF REFERENCE NUMERALS

10 ... Electronic device; 11 ... Hardware; 12 ... Software; 13 ... Electronic device circuit; 14 ... Communication circuit; 15 ... Control program; 16 ... C-function platform; 17 ... Command processing part; 18 ... Command sharing part; 19 ... Communication processing part; 20, 131 a, and 132a ... Command list; 100 ... Electronic device cooperating system; 101,901 ... Electronic camera; 102 ... Mobile phone; 103 ... Printer; 104, 105, and 904 ... Server; 106 ... Personal computer; 107 ... Recording device; 108 ... Air conditioner; 109 ... Smartphone; 151 ... Shooting command; 152 ... E-mail command; 153 ... GPS command; 154 ... Printing command; 155 ... Combining command; 201 ... Optical system; 202 ... Imaging part; 203 ... Buffer; 204 ... Control part; 205 ... Manipulation part; 206 ... Display part; 207 ... Memory card IF; 208 ... Memory; 209 ... Communication circuit; 261 ... Power button; 262 ... Shutter button; 263 ... Mode selection dial; 264 ... Menu button; 265 ... Cross key

## Claims

1. An electronic device comprising:
a communication part performing communication with other device;
a command managing part transmitting a command of an own device to other device and receiving a command of other device to acquire the command of other device by the communication part, and managing the command of the own device and the command of other device; and
a command processing part executing processing of a function corresponding to the command of the own device by the own device when a command selected from the commands managed by the command managing part is the command of the own device, and executing processing of a function corresponding to the command of other device by the other device when the command selected is the command of the other device.

2. The electronic device according to claim 1, wherein
when the selected command is the command of other device, the command processing part transmits the command of the other device to the other device by the communication part and receives an execution result of the command of the other device from the other device by the communication part.

3. The electronic device according to claim 1 or 2, wherein
the command managing part manages device information and event information giving a timing of command execution.

4. The electronic device according to any one of claims 1 to 3, wherein
when newly receiving a second command from a second device after receiving a first command from a first device, the command managing part transmits to the first device a command not included in the first command among the second command.

5. The electronic device according to any one of claims 1 to 4, further comprising
a command retrieving part retrieving a command from other device connected through the communication part, wherein
the command managing part adds the command being retrieved by the command retrieving part.

6. The electronic device according to any one of claims 1 to 5, further comprising a public limit setting part setting a public limit for each of the commands, wherein in a case when other device is not included in a public limit of the command of the own device in transmitting the command of the own device to other device, the command managing part does not transmit the command of the own device.

7. The electronic device according to any one of claims 1 to 6, further comprising
a billing information setting part setting billing information to the command, wherein:
the command managing part transmits to other device the command of the own device being added the billing information; and
when receiving from the other device the command of the own device to which the billing information has been set, the command processing part adds a billing result to an execution result of the command of the own device and transmits to the other device.

8. An electronic device cooperating system comprising a plurality of electronic devices, wherein:
each of the electronic devices individually holds a command for executing processing of a function;
the plurality of electronic devices mutually shares the commands;
a command to be used is selected by a first electronic device among the commands being shared, processing corresponding to a function of a command of the first electronic device is executed by the first electronic device when the command being selected is the command of the first electronic device, and the selected command is transmitted to a second electronic device when the selected command is not the command of the first electronic device; and
the second electronic device which received the selected command executes processing corresponding to a function of a command of the second electronic device and sends an execution result as a reply to a source electronic device when the selected command being received is the command of the second electronic device, and the second electronic device transmits the command to a third electronic device when the received selected command is not the command of the second electronic device, the third electronic device being different from the second electronic device.

9. An electronic device controlling method comprising:
a command management step transmitting a command held by an own device among a plurality of electronic devices, receiving a command of other device to acquire the command of other device, and managing the command of the own device which the own device executes and the command of other device which other device executes; and
a command processing step executing processing of a function corresponding to the command of the own device by the own device when a command selected from the commands being managed is the command of the own device, and executing processing of a function corresponding to the command of other device by the other device when the command selected is the command of the other device.

10. An electronic device controlling method, wherein
in the electronic devices according to claim 9, the command processing step transmits the command of the other device to the other device and receives an execution result of the command of the other device from the other device when the selected command is the command of other device.
